# EUROPEAN PATENT APPLICATION

(11) **EP 4 751 865 A1**
(43) Date of publication of application: **03.06.2026**
(21) Application number: 24845143.7
(22) Date of filing: 13.05.2024
(51) Int. Cl.: B25J 17/02

(54) **ROBOT WRIST**

(30) Priority: 27.07.2023 JP 2023122844
(71) Applicant: KAWASAKI JUKOGYO KABUSHIKI KAISHA, Kobe-shi, Hyogo 650-8670 (JP)
(72) Inventor: FUKUDA Hiroaki, Kobe-shi, Hyogo 650-8670 (JP); MURASE Yohei, Kobe-shi, Hyogo 650-8670 (JP); ORYU Tamami, Kobe-shi, Hyogo 650-8670 (JP)
(74) Representative: Müller-Boré & Partner Patentanwälte PartG mbB
(86) International application number: PCT/JP2024/017613
(87) International publication number: WO 2025/022759

(57) **Abstract**

A robot wrist 4 includes a first base 41, a second base 42, a linkage 6, and a first actuator 51. The linkage 6 includes a Chebyshev linkage 60 coupling the second base 42 to the first base 41 such that the second base 42 is linearly movable in a straight direction Z. The Chebyshev linkage 60 includes a driving link 61 that is coupled to the first base 41 to be rotatable about a driving axis D and is rotationally driven, a driven link 62 coupled to the first base 41 to be rotatable about an axis parallel to the driving axis D, and an intermediate link 63 coupled to each of the driving link 61 and the driven link 62 to be rotatable about an axis parallel to the driving axis D. The second base 42 is coupled to the intermediate link 63.

## Description

### FIELD

The technique disclosed here relates to a robot wrist.

### BACKGROUND

A robot arm to which a hand is coupled is known to date. For example, in a robot arm described in Patent Document 1, a hand is linearly moved from a state where the robot arm is stopped. Accordingly, the hand can access a workpiece or the like only by moving the hand without moving the robot arm.

### CITATION LIST

### PATENT DOCUMENT

Patent Document 1: Japanese Patent Application Publication No. 2009-255207

### SUMMARY

The reach range of the hand is enlarged in accordance with a stroke of the hand in the straight direction. It is therefore conceivable to configure a robot wrist coupling the robot arm and the hand such that the hand can be moved linearly. However, to increase the stroke of the hand in the straight direction, the size of the robot wrist might increase.

It is therefore an object of the technique disclosed here to provide a compact robot wrist with a large stroke in a straight direction.

A robot wrist disclosed here includes: a first base attached to a robot arm; a second base to which a hand is attached; a linkage movably coupling the second base to the first base; and a first actuator that drives the linkage, wherein the linkage includes a Chebyshev linkage coupling the second base to the first base such that the second base is linearly movable in a predetermined straight direction, the Chebyshev linkage includes a driving link that is coupled to the first base to be rotatable about a predetermined driving axis and is rotationally driven, a driven link coupled to the first base to be rotatable about an axis parallel to the driving axis, and an intermediate link coupled to each of the driving link and the driven link to be rotatable about an axis parallel to the driving axis, and the second base is coupled to the intermediate link.

The thus-obtained robot wrist is compact and generates a large stroke in a straight direction.

### BRIEF DESCRIPTION OF THE DRAWINGS

[FIG. 1] FIG. 1 is a schematic view illustrating a robot.
[FIG. 2] FIG. 2 is a schematic view for describing movement of a wrist and a hand in a container during transfer work.
[FIG. 3] FIG. 3 is a perspective view of the wrist in a basic state.
[FIG. 4] FIG. 4 a side view of the wrist in the basic state.
[FIG. 5] FIG. 5 is a plan view of the wrist in the basic state.
[FIG. 6] FIG. 6 is a cross-sectional view of the wrist taken along line VI-VI in FIG. 5.
[FIG. 7] FIG. 7 is a side view of the wrist in an advanced state.
[FIG. 8] FIG. 8 is a side view of the wrist in a state where the hand is most advanced in a straight direction.
[FIG. 9] FIG. 9 is a perspective view of the wrist in the state where the hand is most advanced in the straight direction.
[FIG. 10] FIG. 10 is a side view of the wrist after a pitch motion.
[FIG. 11] FIG. 11 is a side view of the wrist 4 in a case where the hand is most advanced in the straight direction and a pitch angle is 90 degrees.
[FIG. 12] FIG. 12 is a perspective view of the wrist after a roll motion.
[FIG. 13] FIG. 13 is a front view of the wrist in a state where the linkage is rotated about a roll axis.
[FIG. 14] FIG. 14 is a side view of the wrist after a yaw motion.
[FIG. 15] FIG. 15 is a front view of the hand and wrist located above the container.
[FIG. 16] FIG. 16 is a front view of the hand and the wrist after the roll motion.
[FIG. 17] FIG. 17 is a front view of the hand and the wrist after a straight-traveling motion.
[FIG. 18] FIG. 18 is a side view of the hand and the wrist before a yaw motion in picking adjacent workpieces.
[FIG. 19] FIG. 19 is a side view of the hand and the wrist after the yaw motion in picking adjacent workpieces.
[FIG. 20] FIG. 20 is a side view of the hand and the wrist in a state where the hand is retracted in the straight direction while gripping a workpiece.
[FIG. 21] FIG. 21 is a side view of the hand and the wrist in a state where the hand gripping a workpiece is rotated about a pitch axis.

### DESCRIPTION OF EMBODIMENTS

An exemplary embodiment will be described in detail hereinafter with reference to the drawings. In the present disclosure, the terms "parallel," "orthogonal," and "identical" include not only "strictly parallel," "strictly orthogonal," and "strictly identical," but also "substantially parallel," "substantially orthogonal," and "substantially identical."

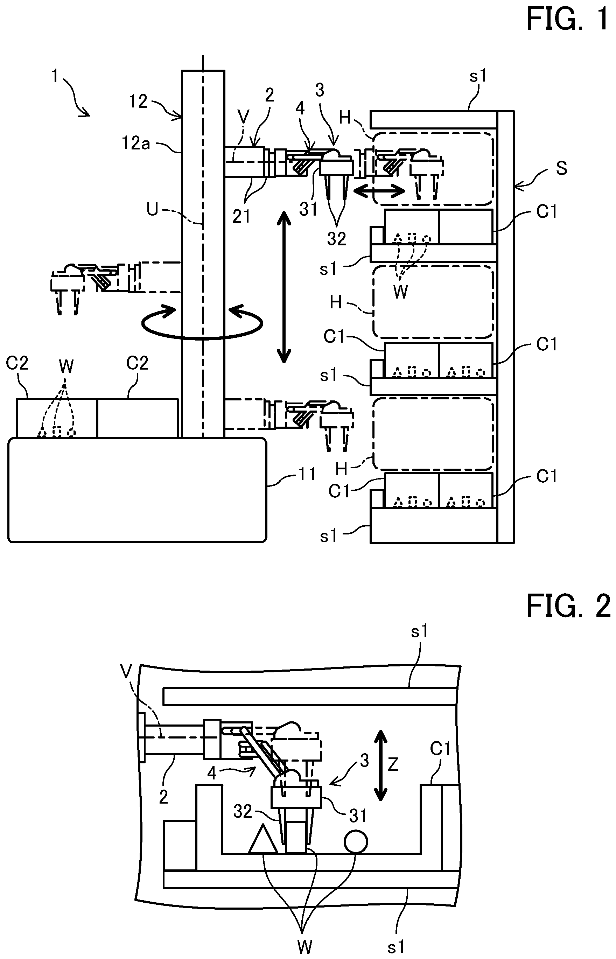

FIG. 1 is a schematic view illustrating a robot 1. The robot 1 performs transfer work. Specifically, the robot 1 takes a workpiece W from a first container C1 placed on a shelf S and transfers the workpiece W to a second container C2. The first container C1 is a source container that accommodates the workpiece W. The second container C2 is a destination container that accommodates the workpiece W.

The shelf S includes shelf boards s1 arranged with intervals in the top-bottom direction. The first containers C1 are placed on the shelf boards s1. In the shelf S, a work space H where the robot arm 2 can enter is defined between each first container C1 and the shelf board s1 located above the first container C1.

The robot 1 includes a carriage 11, an elevator 12 mounted on the carriage 11, a robot arm 2 attached to the elevator 12, a robot wrist 4 attached to the distal end of the robot arm 2, and a hand 3 attached to the robot wrist 4. Hereinafter, the robot wrist 4 will be simply referred to as a "wrist 4."

The robot 1 moves by traveling of the carriage 11. The carriage 11 is, for example, an automated guided vehicle (AGV). In this example, the carriage 11 is loaded with the second container C2.

The elevator 12 raises and lowers the robot arm 2 and turns the robot arm 2. In this example, the elevator 12 has a strut 12a. The strut 12a has an axis extending in the top-bottom direction. The axis of the strut 12a is also referred to as an elevation axis U. The strut 12a is attached to the carriage 11 to be rotatable about the elevation axis U. The strut 12a supports the robot arm 2 such that the robot arm 2 can move along the elevation axis U. The elevator 12 includes a linear actuator that moves the robot arm 2 along the elevation axis U, and a rotation actuator that rotates the strut 12a about the elevation axis U. That is, the elevator 12 moves the robot arm 2 along the elevation axis U by the linear actuator. The elevator 12 turns the strut 12a, and accordingly, the robot arm 2 about the elevation axis U by the rotation actuator.

The robot arm 2 is a linear extension and contraction arm. The robot arm 2 extends and contracts in the direction of a predetermined advancing/retracting axis V. The robot arm 2 moves the wrist 4 and the hand 3 by extension and contraction. Specifically, the robot arm 2 includes cylindrical arm housings 21. The axis of each of the arm housings 21 coincides with the advancing/retracting axis V. The arm housings 21 are nested. The arm housings 21 are movable relative to each other along the advancing/retracting axis V. The robot arm 2 includes a linear actuator that moves the arm housings 21 relative to each other. The relative movement of the arm housings 21 along the advancing/retracting axis V causes the robot arm 2 to extend and contract along the advancing/retracting axis V.

The robot arm 2 is supported by the elevator 12 with the advancing/retracting axis V intersecting the elevation axis U. Specifically, the advancing/retracting axis V is orthogonal to the elevation axis U. The advancing/retracting axis V may be located at a skew position with respect to the elevation axis U.

The wrist 4 moves the hand 3 with respect to the robot arm 2. The wrist 4 is attached to the distal end of the robot arm 2.

The hand 3 holds a workpiece W. The hand 3 may hold an object in any form. For example, holding by the hand 3 may be gripping or suction. In this example, the hand 3 grips the workpiece W. The hand 3 includes a hand body 31 and fingers 32 attached to the hand body 31. The hand 3 opens and closes the fingers 32.

Transfer work by the robot 1 will be briefly described. FIG. 2 is a schematic view for describing movement of the wrist 4 and the hand 3 in a container during transfer work. As illustrated in FIG. 1, the robot 1 moves to a position facing the shelf S by traveling of the carriage 11. At this time, the elevator 12 moves the robot arm 2 so that the hand 3 is located at a predetermined entry start position. The entry start position is a position where the hand 3 faces the work space H between the target first container C1 and the shelf board s1 located above the first container C1.

Next, the robot 1 extends the robot arm 2 to bring the robot arm 2 into the work space H. Accordingly, the wrist 4 and the hand 3 enter the work space H. The hand 3 is moved to a position above the workpiece W to be picked in the first container C1.

Subsequently, as illustrated in FIG. 2, the robot 1 moves the hand 3 into the first container C1. For example, the robot 1 moves the hand 3 via the wrist 4 in a direction that intersects the advancing/retracting axis V of the robot arm 2 to cause the hand 3 to enter the first container C1. Then, the robot 1 grips the workpiece W to be picked up with the fingers 32 of the hand 3.

When the gripping is completed, the robot 1 moves the hand 3 to a position above the first container C1, that is, to the work space H. From this state, the robot 1 contracts the robot arm 2 and retracts the hand 3 from the work space H together with the workpiece W.

Thereafter, the elevator 12 turns and raises and lowers the robot arm 2 again to move the hand 3 to a position above the second container C2. The robot 1 moves the hand 3 into the second container C2. The robot 1 places the workpiece W in the second container C2 by releasing gripping of the workpiece W with the fingers 32 of the hand 3.

In this manner, the workpiece W to be picked is transferred from the first container C1 to the second container C2.

### =Wrist=

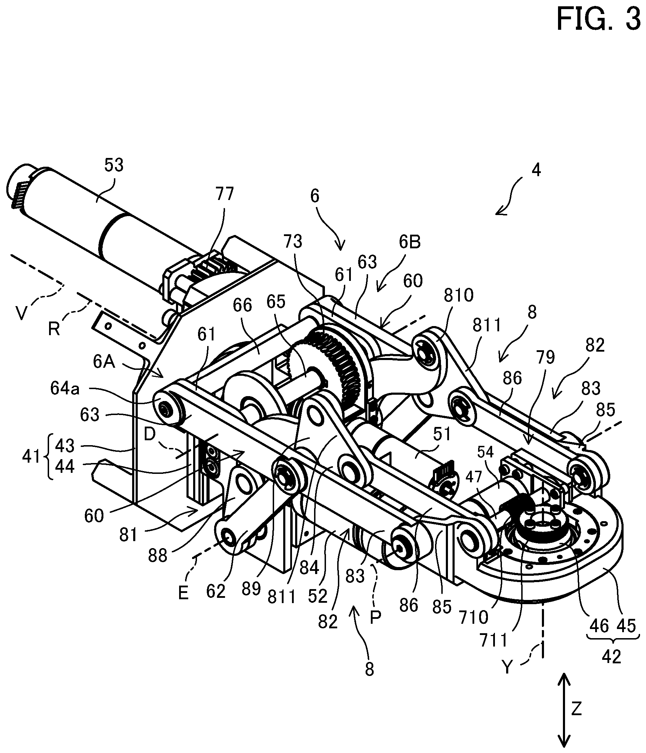

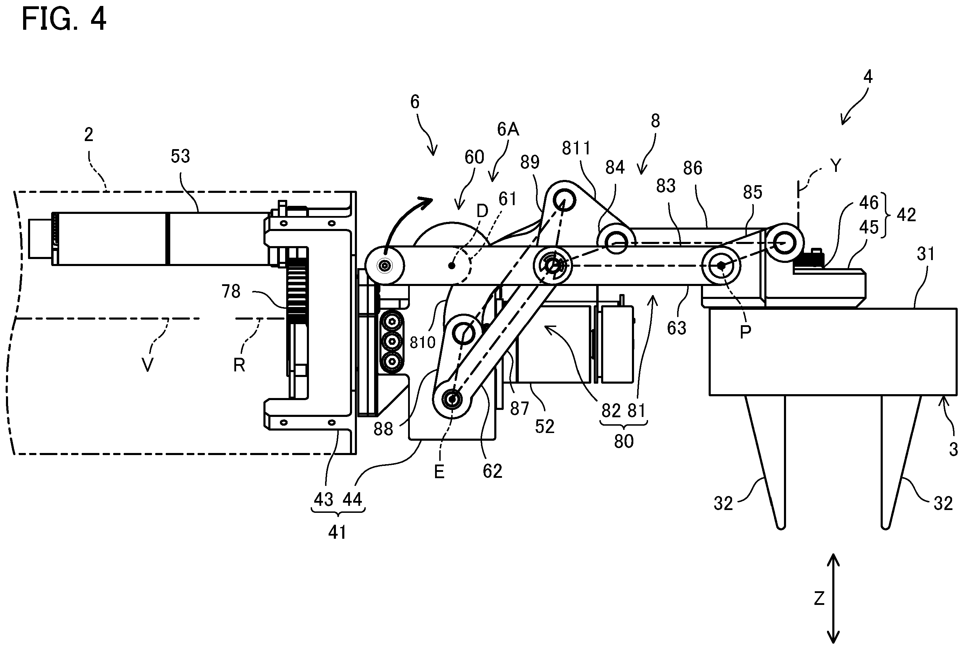

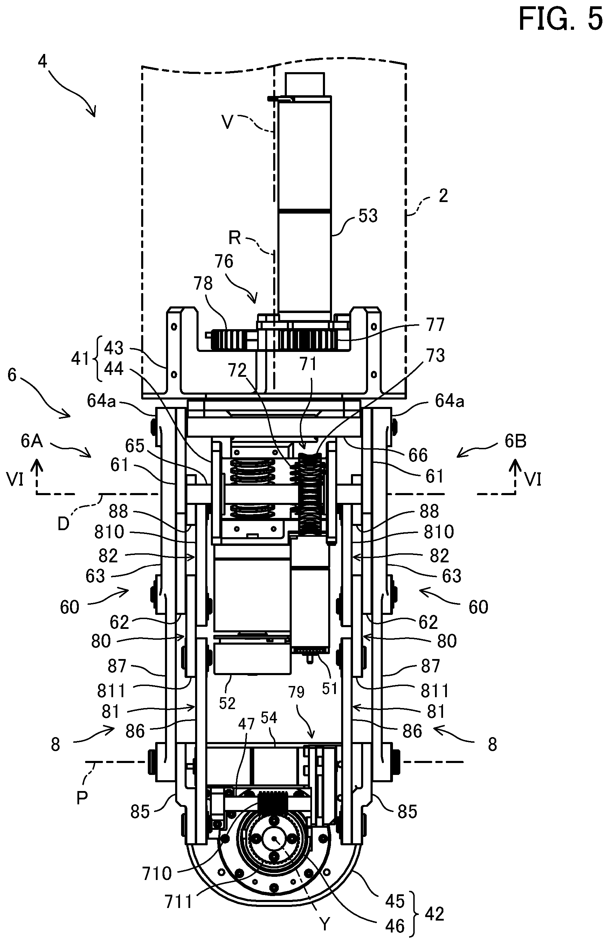

Next, the wrist 4 will be described in detail. FIG. 3 is a perspective view of the wrist 4 in a basic state. FIG. 4 is a side view of the wrist 4 in the basic state. FIG. 5 is a plan view of the wrist 4 in the basic state. In FIGS. 3 and 5, the hand 3 is omitted.

The wrist 4 moves the hand 3 in a predetermined straight direction Z. The wrist 4 includes a first base 41 attached to the robot arm 2, a second base 42 to which the hand 3 is attached, a linkage 6 movably coupling the second base 42 to the first base 41, and a first actuator 51 that drives the linkage 6. The wrist 4 is attached to the robot arm 2 via the first base 41. The hand 3 is attached to the wrist 4 via the second base 42. The first base 41 and the second base 42 are coupled to each other via the linkage 6. The first actuator 51 drives the linkage 6 so that the second base 42 thereby moves relative to the first base 41. That is, the hand 3 moves relative to the robot arm 2.

The linkage 6 includes a Chebyshev linkage 60 coupling the second base 42 to the first base 41 such that the second base 42 linearly moves in the predetermined straight direction Z. The first actuator 51 drives a link included in the Chebyshev linkage 60 to thereby move the second base 42, that is, the hand 3, linearly in the straight direction Z.

The linear movement of the second base 42 by the Chebyshev linkage 60 is not limited to strictly linear movement and may be substantially linear movement. In this example, the linear movement of the second base 42 is substantially linear movement along the straight direction Z. The straight direction Z is a direction that intersects the advancing/retracting axis V of the robot arm 2, specifically, a direction orthogonal to the advancing/retracting axis V. That is, the wrist 4 linearly moves the hand 3 in the direction intersecting an advancing/retracting direction of the robot arm 2 via the linkage 6.

The wrist 4 also performs a pitch motion, a roll motion, and a yaw motion, as well as the straight-traveling motion. Specifically, the wrist 4 includes a second actuator 52 that rotates the second base 42 about a pitch axis P extending in a direction intersecting the straight direction Z, and a pitch transfer 8 that transfers a driving force of the second actuator to the second base 42. The wrist 4 further includes a third actuator 53 that rotates the second base 42 about a roll axis R extending in a direction intersecting both the direction of the pitch axis P and the straight direction Z. The wrist 4 further includes a fourth actuator 54 that rotates the hand 3 about a predetermined yaw axis Y and a yaw transfer 79 that transfers a driving force of the fourth actuator 54. The basic state of the wrist 4 is a state serving as a basis in a straight-traveling motion, a pitch motion, a roll motion, and a yaw motion.

### =First Base=

The first base 41 includes a base body 43 attached to the robot arm 2 and a rotation body 44 rotatably coupled to the base body 43. The base body 43 is fixed to a distal end (an end opposite to the elevator 12 in this example) of the robot arm 2. The rotation body 44 is coupled to the base body 43 via a bearing to be rotatable about the roll axis R. In this example, the roll axis R is parallel to the advancing/retracting axis V, more specifically, is aligned with the advancing/retracting axis V in a straight line. The linkage 6 is attached to the rotation body 44.

### =Second Base=

The second base 42 includes a base body 45 attached to the linkage 6 and a rotation body 46 rotatably coupled to the base body 45. The rotation body 46 is coupled to the base body 45 via a bearing to be rotatable about the yaw axis Y. As illustrated in FIG. 4, the hand 3 is attached to the rotation body 46. When the rotation body 46 rotates with respect to the base body 45, the hand 3 also rotates about the yaw axis Y with respect to the base body 45, together with the rotation body 46.

### =Linkage=

The linkage 6 includes a pair of a first linkage 6A and a second linkage 6B facing each other. Each of the first linkage 6A and the second linkage 6B movably couples the second base 42 to the first base 41. Each of the first linkage 6A and the second linkage 6B includes the Chebyshev linkage 60. The first linkage 6A and the second linkage 6B have the same configuration. The first linkage 6A and the second linkage 6B perform the same operation to move the second base 42.

The linkage 6 is coupled to the first base 41 to be rotatable about the roll axis R. Specifically, the linkage 6 is attached to the rotation body 44 of the first base 41. Rotation of the rotation body 44 about the roll axis R causes the linkage 6 to rotate about the roll axis R. The rotation of the linkage 6 about the roll axis R also causes the hand 3 to rotate about the roll axis R together with the second base 42.

### =Chebyshev Linkage=

The Chebyshev linkage 60 includes a driving link 61, a driven link 62, and an intermediate link 63. The driving link 61 is coupled to the first base 41 to be rotatable about a predetermined driving axis D and is rotationally driven. The driven link 62 is coupled to the first base 41 to be rotatable about an axis parallel to the driving axis D. The intermediate link 63 is coupled to each of the driving link 61 and the driven link 62 to be rotatable about an axis parallel to the driving axis D. Specifically, a shaft 65 is supported by the first base 41 to be rotatable about the axis of the shaft 65. The rotation axis of the shaft 65 is the driving axis D. The driving link 61 is non-rotatably coupled to the shaft 65. That is, the driving link 61 is coupled to the first base 41 via the shaft 65 to be rotatable about the driving axis D. The driving link 61 and the shaft 65 are coupled to the rotation body 44 of the first base 41. The driven link 62 is coupled to the rotation body 44 of the first base 41. The rotation axis of the driven link 62 is separated from the driving axis D of the driving link 61 in a direction parallel to the straight direction Z. The second base 42, specifically, the base body 45, is coupled to the intermediate link 63. The driven link 62 is coupled to a portion of the intermediate link 63 between a portion to which the driving link 61 is coupled and a portion to which the second base 42 is coupled. When the driving link 61 is rotationally driven, the driven link 62 and the intermediate link 63 move in conjunction, and the second base 42 moves.

In the Chebyshev linkage 60, a portion of the intermediate link 63 to which the second base 42 is coupled approximately linearly moves in accordance with rotation of the driving link 61 by appropriately setting the link length of each link. Specifically, suppose the link length of the driving link 61 is 1, the link length of the driven link 62 is 2.5, a distance between a coupling portion of the driving link 61 and a coupling portion of the driven link 62 in the intermediate link 63 is 2.5, a distance between a coupling portion of the driven link 62 and a coupling portion of the second base 42 in the intermediate link 63 is 2.5, and a distance between the driving axis D of the driving link 61 and the rotation axis of the driven link 62 is 2. Accordingly, when the driving link 61 is rotationally driven, a coupling portion of the second base 42 in the intermediate link 63, that is, the second base 42, linearly moves. The direction of movement of the second base 42 substantially coincides with the straight direction Z.

The first linkage 6A and the second linkage 6B face each other in the direction of the driving axis D. That is, the direction in which the first linkage 6A and the second linkage 6B face each other coincides with the direction of the driving axis D. In the direction of the driving axis D, the driving link 61 of the first linkage 6A and the driving link 61 of the second linkage 6B face each other, the driven link 62 of the first linkage 6A and the driven link 62 of the second linkage 6B face each other, and the intermediate link 63 of the first linkage 6A and the intermediate link 63 of the second linkage 6B face each other.

More specifically, each two links coupled to each other in the linkage overlap the direction of the driving axis D at the joint, and thus, are located at offset positions in the direction of the driving axis D. As illustrated in FIG. 5, the driving link 61 of the first linkage 6A is located inward of the intermediate link 63 of the first linkage 6A in the direction in which the first linkage 6A and the second linkage 6B face each other. The driving link 61 of the second linkage 6B is located inward of the intermediate link 63 of the second linkage 6B in the direction in which the first linkage 6A and the second linkage 6B face each other. That is, the driving link 61 of the first linkage 6A and the driving link 61 of the second linkage 6B are located between the intermediate link 63 of the first linkage 6A and the intermediate link 63 of the second linkage 6B. In the links of the first linkage 6A and the second linkage 6B, the intermediate link 63 of the first linkage 6A and the intermediate link 63 of the second linkage 6B are located at outermost sides in the direction in which the first linkage 6A and the second linkage 6B face each other.

The driving link 61 of the first linkage 6A and the driving link 61 of the second linkage 6B are coupled to the common shaft 65.

The intermediate link 63 of the first linkage 6A and the intermediate link 63 of the second linkage 6B are coupled to each other. Specifically, as illustrated in FIG. 5, a joint 64a coupling the driving link 61 and the intermediate link 63 in the first linkage 6A is coupled to a joint 64a coupling the driving link 61 and the intermediate link 63 in the second linkage 6B. More specifically, the joint 64a of the first linkage 6A and the joint 64a of the second linkage 6B are coupled to each other via a shaft 66 extending in parallel with the driving axis D. The driving link 61 and the intermediate link 63 of the first linkage 6A are rotatably coupled to one end of the shaft 66. The driving link 61 and the intermediate link 63 of the second linkage 6B are rotatably coupled to the other end of the shaft 66.

### =First Actuator=

The first actuator 51 is an electric motor, specifically, a servo motor. The first actuator 51 includes an encoder. The first actuator 51 is attached to the first base 41, more specifically, the rotation body 44. As illustrated in FIG. 5, the first actuator 51 is located between the first linkage 6A and the second linkage 6B.

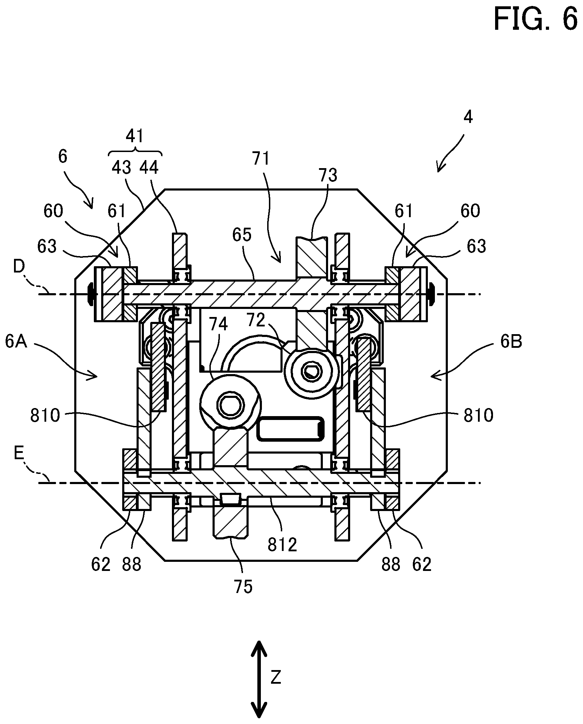

FIG. 6 is a cross-sectional view of the wrist 4 taken along line VI-VI in FIG. 5. Rotation of the first actuator 51 is transferred to the Chebyshev linkage 60 via a straight-traveling transfer 71. The straight-traveling transfer 71 includes a worm gear. Specifically, the straight-traveling transfer 71 includes a worm 72 attached to an output shaft of the first actuator 51 and a worm wheel 73 coupled to the driving link 61 of the Chebyshev linkage 60 and meshing with the worm 72. The worm 72 rotates integrally with the output shaft. The worm wheel 73 is non-rotatably attached to the shaft 65. That is, the worm wheel 73 is coupled to the driving link 61 via the shaft 65.

When the first actuator 51 is operated, the worm 72 rotates. The worm wheel 73 rotates in conjunction with the worm 72, and the shaft 65 rotates integrally with the worm wheel 73. Since the driving link 61 is non-rotatably coupled to the shaft 65, the driving link 61 rotates about the driving axis D integrally with the shaft 65. In this manner, the Chebyshev linkage 60 is driven by the first actuator 51. Since the driving links 61 of both the first linkage 6A and the second linkage 6B are coupled to the shaft 65, the Chebyshev linkage 60 of the first linkage 6A and the Chebyshev linkage 60 of the second linkage 6B move integrally.

### =Linear Movement=

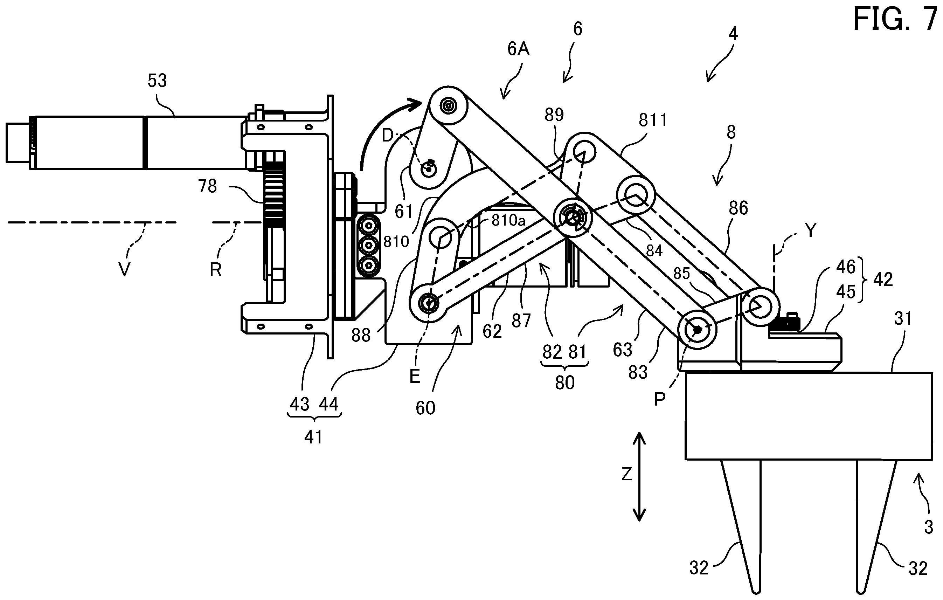

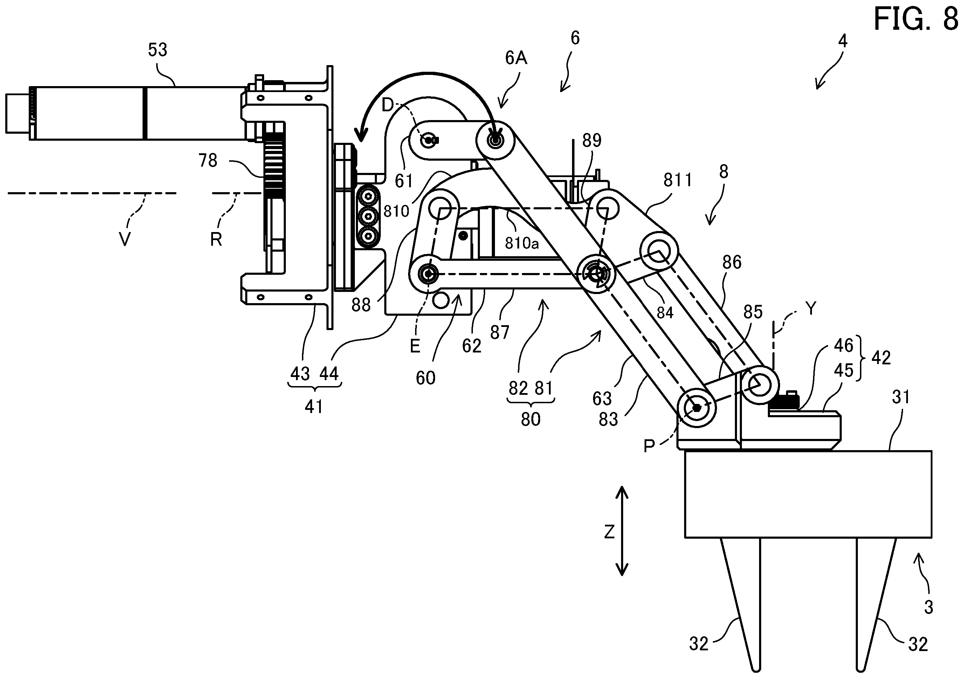

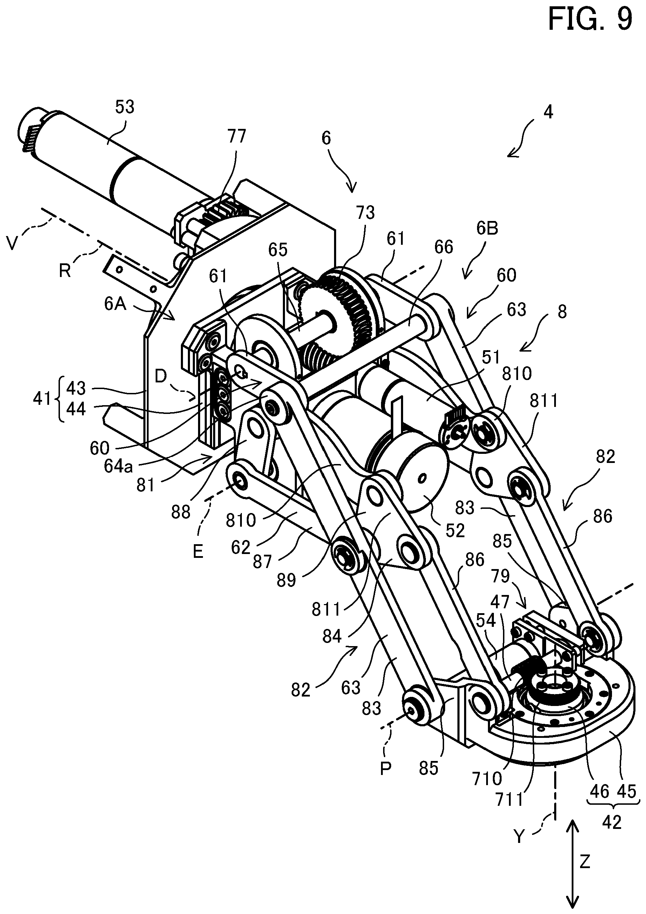

Movement of the wrist 4 by the Chebyshev linkage 60 will be described in detail. FIG. 7 is a side view of the wrist 4 in an advanced state. FIG. 8 is a side view of the wrist 4 in a state where the hand 3 is most advanced in the straight direction Z. FIG. 9 is a perspective view of the wrist 4 in the state where the hand 3 is most advanced in the straight direction Z. In FIG. 9, the hand 3 is omitted. The advanced state of the wrist 4 is a state where the wrist 4 has moved in the straight direction Z from the basic state.

In the Chebyshev linkage 60, in a certain section (hereinafter referred to as a "specific section") in one turn of the driving link 61, a distal end portion of the intermediate link 63, that is, an end portion opposite to an end portion of the intermediate link 63 to which the driving link 61 is coupled, substantially linearly moves. The moving direction of the distal end portion of the intermediate link 63 substantially coincides with the straight direction Z. Specifically, the distal end portion of the intermediate link 63 linearly moves between a first position and a second position in the straight direction Z. The second position is located farther from the driving axis D of the driving link 61 in the straight direction Z than the first position is. That is, movement of the intermediate link 63 toward the second position in the straight direction Z is movement in a direction away from the driving axis D of the driving link 61, and is also expressed as "advancement." Movement of the intermediate link 63 toward the first position in the straight direction Z is movement in a direction toward the driving axis D of the driving link 61, and is also expressed as "retraction." In the basic state of the wrist 4, the distal end portion of the intermediate link 63 is located at the first position. Positions of the second base 42, the hand 3, and other components when the distal end portion of the intermediate link 63 is located at the first position will also be referred to as the "first position." Positions of the second base 42, the hand 3, and other components when the distal end portion of the intermediate link 63 is located at the second position will also be referred to as the "second position." For example, the first position of the hand 3 is a position of the hand 3 when the distal end portion of the intermediate link 63 is located at the first position.

When the driving link 61 is in the state of FIG. 4, the distal end portion of the intermediate link 63 is located at the first position. In FIGS. 3 and 5, the distal end portion of the intermediate link 63 is also located at the first position. When the driving link 61 rotates clockwise (in the direction of the arrow in FIG. 4) from the state of FIG. 4, the distal end portion of the intermediate link 63 linearly moves toward the second position (downward in the drawing) in the straight direction Z, as illustrated in FIG. 7. When the driving link 61 reaches the state of FIG. 8, the distal end portion of the intermediate link 63 reaches the second position in the straight direction Z. When the driving link 61 rotates counterclockwise from the state of FIG. 8, the distal end portion of the intermediate link 63 linearly moves toward the first position in the straight direction Z. When the driving link 61 reaches the state of FIG. 4, the distal end portion of the intermediate link 63 reaches the first position in the straight direction Z.

In a case where the driving link 61 further rotates clockwise from the state of FIG. 8 to the state of FIG. 4, the distal end portion of the intermediate link 63 also returns to the first position. However, the trajectory of the distal end portion of the intermediate link 63 in this case is not linear but is curved.

In the manner described above, in the specific section in rotation of the driving link 61, the distal end portion of the intermediate link 63 linearly moves. The second base 42 is coupled to the distal end portion of the intermediate link 63, and the hand 3 is attached to the second base 42. That is, the hand 3 linearly moves. The hand 3 can be advanced or retracted substantially in the straight direction Z by rotating the driving link 61 in the specific section. Depending on the direction of the rotation of the driving link 61 in this specific section, it is determined whether the distal end portion of the intermediate link 63, that is, the hand 3, moves toward the first position or the second position in the straight direction Z.

### =Pitch Transfer =

The second base 42 is coupled to the intermediate link 63 to be rotatable about the pitch axis P. Specifically, as illustrated in FIG. 3, the intermediate link 63 of the first linkage 6A and the intermediate link 63 of the second linkage 6B face each other in the direction of the driving axis D. The second base 42 is coupled to the two intermediate links 63 to be rotatable about the pitch axis P. The pitch axis P is parallel to the driving axis D. That is, the pitch axis P is orthogonal to a plane in which the links of the linkage 6 move. The pitch transfer 8 is coupled to the second base 42. The second base 42 includes the rotation body 46 that is rotatable about the yaw axis Y. The yaw axis Y extends in a direction intersecting the direction of the pitch axis P.

As illustrated in FIG. 4, the pitch transfer 8 includes four-bar linkages 80. The four-bar linkages 80 are parallel linkages. The intermediate link 63 of the Chebyshev linkage 60 functions as a link included in the four-bar linkage 80. In this example, as illustrated in FIG. 5, the pitch transfer 8 includes the four-bar linkage 80 corresponding to the first linkage 6A and the four-bar linkage 80 corresponding to the second linkage 6B. The four-bar linkage 80 corresponding to the first linkage 6A and the four-bar linkage 80 corresponding to the second linkage 6B have the same configuration.

Specifically, as illustrated in FIG. 4, each of the four-bar linkages 80 includes a first four-bar linkage 81 that is coupled to the second base 42, and a second four-bar linkage 82 that is coupled to the first four-bar linkage 81 and driven by the second actuator 52. The intermediate link 63 of the Chebyshev linkage 60 functions as a link included in the first four-bar linkage 81, and the driven link 62 of the Chebyshev linkage 60 functions as a link included in the second four-bar linkage 82.

Specifically, the first four-bar linkage 81 includes a first fixing link 83, a first driving link 84 coupled to the first fixing link 83 to be rotatable about an axis parallel to the pitch axis P, a first driven link 85 coupled to the first fixing link 83 to be rotatable about an axis parallel to the pitch axis P, and a first intermediate link 86 coupled to each of the first driving link 84 and the first driven link 85 to be rotatable about an axis parallel to the pitch axis P. The first fixing link 83 is the intermediate link 63 of the Chebyshev linkage 60. The first driven link 85 is fixed to the second base 42. More specifically, the first driven link 85 is a part of the base body 45 of the second base 42. The first intermediate link 86 is located at a position facing the first fixing link 83. The first four-bar linkage 81 is a parallel linkage. The four joints coupling the first fixing link 83, the first driving link 84, the first driven link 85, and the first intermediate link 86 are located substantially at vertexes of a parallelogram.

The second four-bar linkage 82 includes a second fixing link 87, a second driving link 88 coupled to the second fixing link 87 to be rotatable about an axis parallel to the pitch axis P, a second driven link 89 coupled to the second fixing link 87 to be rotatable about an axis parallel to the pitch axis P, and a second intermediate link 810 coupled to each of the second driving link 88 and the second driven link 89 to be rotatable about an axis parallel to the pitch axis P. The second fixing link 87 is the driven link 62 of the Chebyshev linkage 60. The second intermediate link 810 is located at a position facing the second fixing link. The second four-bar linkage 82 is a parallel linkage. The four joints coupling the second fixing link 87, the second driving link 88, the second driven link 89, and the second intermediate link 810 are located substantially at vertexes of a parallelogram.

In FIG. 4, straight line segments defining the link lengths of the links in the first four-bar linkage 81 and the second four-bar linkage 82 are indicated by broken lines. The same holds for FIGS. 7, 8, 10, 11, and 14.

The second driven link 89 is coupled to the first driving link 84. The second driven link 89 is coupled to the first driving link 84 via a connecting link 811. When the second driven link 89 moves, the first driving link 84 moves in conjunction with the second driven link 89. More specifically, the first driving link 84 and the second driven link 89 are also coupled to a coupling portion between the driven link 62 and the intermediate link 63. The first driving link 84, the second driven link 89, and the connecting link 811 are integrally shaped. The positional relationship among the first driving link 84, the second driven link 89, and the connecting link 811 is fixed. In this example, each of the first driving link 84, the second driven link 89, and the connecting link 811 is a substantially triangular plate. When the second driven link 89 moves, the first driving link 84 and the connecting link 811 move in conjunction with the second driven link 89.

The second driving link 88 is rotationally driven by the second actuator 52. As illustrated in FIG. 6, a shaft 812 that is rotationally driven by the second actuator 52 is coupled to the second driving link 88. Specifically, the shaft 812 is supported by the first base 41 to be rotatable about the axis of the shaft 812. A rotation axis E, that is, an axis, of the shaft 812 is parallel to the driving axis D. The second driving link 88 is non-rotatably coupled to the shaft 812. That is, the second driving link 88 is coupled to the first base 41 via the shaft 812 to be rotatable about the rotation axis E. The second driving link 88 and the shaft 812 are coupled to the rotation body 44 of the first base 41. The driven link 62 is coupled to the shaft 812 to be rotatable about the rotation axis E. That is, the driven link 62 is rotatably coupled to the first base 41, and also rotatably coupled to the second driving link 88, via the shaft 812.

When the shaft 812 is rotationally driven, the second driving link 88 rotates integrally with the shaft 812. On the other hand, the driven link 62 does not rotate integrally with the shaft 812. When the second driving link 88 rotates, the second intermediate link 810 and the second driven link 89 move in conjunction with rotation of the second driving link 88. When the second driven link 89 moves, the first driving link 84 of the first four-bar linkage 81 rotates in conjunction with the second driven link 89. When the first driving link 84 rotates, the first intermediate link 86 and the first driven link 85 move in conjunction with rotation of the first driving link 84. Since the first driven link 85 is integrated with the second base 42, the second base 42 rotates about the pitch axis P. Even when the second driving link 88 rotates, the first fixing link 83 and the second fixing link 87, that is, the Chebyshev linkage 60, are not affected by the rotation.

In this manner, when the second driving link 88 is rotationally driven, the second base 42 and the hand 3 rotate about the pitch axis P without affecting the Chebyshev linkage 60.

### =Second Actuator=

The second actuator 52 is an electric motor, specifically, a servo motor. The second actuator 52 includes an encoder. As illustrated in FIG. 5, the second actuator 52 is attached to the first base 41, more specifically, the rotation body 44. The second actuator 52 is located between the first linkage 6A and the second linkage 6B.

Rotation of the second actuator 52 is transferred to the four-bar linkage 80 via a worm gear. Specifically, as illustrated in FIG. 6, a worm 74 is attached to the output shaft of the second actuator 52. The worm 74 rotates integrally with the output shaft. A worm wheel 75 is coupled to the second driving link 88 of the four-bar linkage 80. The worm wheel 75 is non-rotatably attached to the shaft 812. That is, the worm wheel 75 is coupled to the second driving link 88 via the shaft 812. The worm 74 and the worm wheel 75 mesh with each other.

When the second actuator 52 is operated, the worm 74 rotates. The worm wheel 75 rotates in conjunction with the worm 74, and the shaft 812 rotates integrally with the worm wheel 75. Since the second driving link 88 is non-rotatably coupled to the shaft 812, the second driving link 88 rotates about the rotation axis E integrally with the shaft 812. In this manner, the four-bar linkage 80 is driven by the second actuator 52. Since the second driving link 88 of the four-bar linkage 80 corresponding to the first linkage 6A and the second driving link 88 of the four-bar linkage 80 corresponding to the second linkage 6B are coupled to the shaft 812, the second driving links 88 of the two four-bar linkages 80 operate integrally.

### =Pitch Motion=

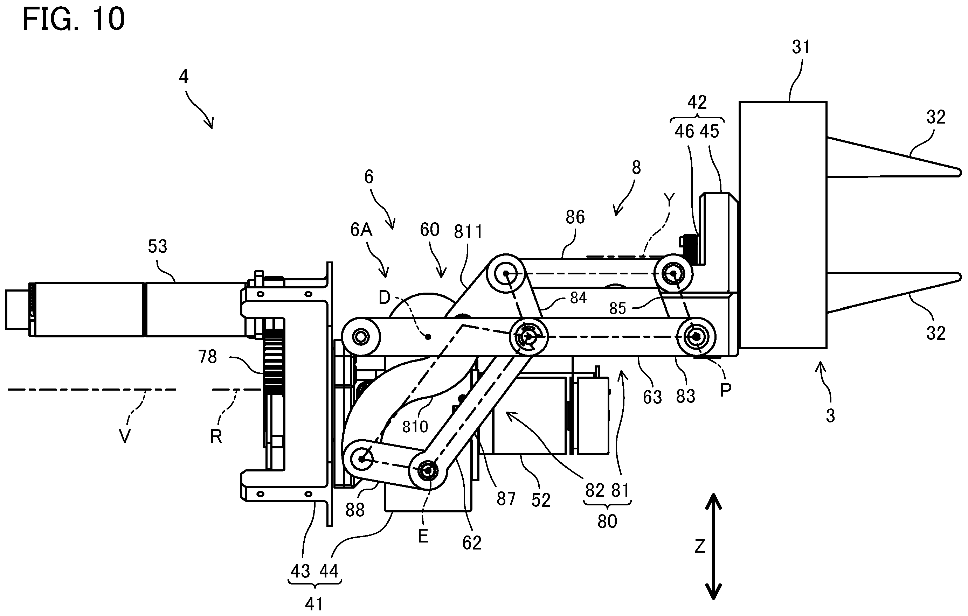

Next, a pitch motion of the wrist 4 will be described. FIG. 10 is a side view of the wrist 4 after a pitch motion. The wrist 4 in FIG. 10 has rotated the hand 3 about the pitch axis P from the basic state of FIG. 4. In this example, a pitch angle when the fingers 32 extend in the straight direction Z, that is, when the yaw axis Y is directed in the straight direction Z, is defined as 0 degrees. A direction in which the tips of the fingers 32 rotate in the direction opposite to the first base 41 from the state where the pitch angle is 0 degrees is positive. The hand 3 in FIG. 10 is rotated approximately 90 degrees about the pitch axis P.

In a case where the Chebyshev linkage 60 is stationary, the driven link 62 (i.e., the second fixing link 87) and the intermediate link 63 (i.e., the first fixing link 83) do not move. When the second driving link 88 is rotationally driven by the second actuator 52, the second intermediate link 810 and the second driven link 89 move in conjunction with the second driving link 88. Since the relative positional relationship between the first driving link 84 and the second driven link 89 is unchangeable, the first driving link 84 rotates in conjunction with the movement of the second driven link 89. When the first driving link 84 rotates, the first intermediate link 86 and the first driven link 85 move in conjunction with the first driving link 84. The first driven link 85 rotates about the pitch axis P. The first driven link 85 is integrated with the second base 42, and the hand 3 is attached to the second base 42. That is, the hand 3 rotates about the pitch axis P. The pitch angle that is an angle of the second base 42 about the pitch axis P is adjusted based on the rotation angle of the second driving link 88.

When the Chebyshev linkage 60 moves, the driven link 62 and the intermediate link 63 move, and accordingly, the four-bar linkage 80 also moves. However, in a case where the second driving link 88 is not rotationally driven, as illustrated in FIGS. 4, 7, and 8, the angle of the first driven link 85 does not change, and the pitch angle of the hand 3 is maintained. That is, the pitch transfer 8 maintains the pitch angle of the second base 42 about the pitch axis P while the second base 42 moves in the straight direction Z via the Chebyshev linkage 60. The posture of the first driving link 84 that is a link at a position facing the first driven link 85 as a link integrated with the second base 42 is maintained and unchanged during movement of the Chebyshev linkage 60.

Specifically, since the second four-bar linkage 82 is a parallel linkage, the angle of the second driving link 88 and the second driven link 89 facing each other does not change in FIGS. 4, 7, and 8. That is, if the second driving link 88 does not rotate, the angle of the second driven link 89 does not change even when the second driven link 89 moves. In addition, since the second driven link 89 and the first driving link 84 are integrally coupled to each other, the relative positional relationship between the second driven link 89 and the first driving link 84 is unchanged. That is, if the angle of the second driven link 89 does not change, the angle of the first driving link 84 does not change even when the first driving link 84 moves. Furthermore, since the first four-bar linkage 81 is a parallel linkage, the angle of the first driving link 84 and the first driven link 85 facing each other does not change. That is, if the angle of the first driving link 84 does not change, the angle of the first driven link 85 does not change even when the first driven link 85 moves. That is, even when the second driven link 89, the first driving link 84, and the first driven link 85 move in conjunction with movement of the Chebyshev linkage 60, the angles of the second driven link 89, the first driving link 84, and the first driven link 85 do not change unless the second driving link 88 rotates.

In other words, the pitch angle of the hand 3 depends on the rotation angle of the second driving link 88, and is not affected by the state of the Chebyshev linkage 60. Whether the Chebyshev linkage 60 is stopped or in operation, when the second driving link 88 is rotationally driven, the pitch angle of the hand 3 changes in accordance with the rotation angle of the second driving link 88. Whether the Chebyshev linkage 60 is stopped or in operation, when the second driving link 88 is not rotating, the pitch angle of the hand 3 is maintained.

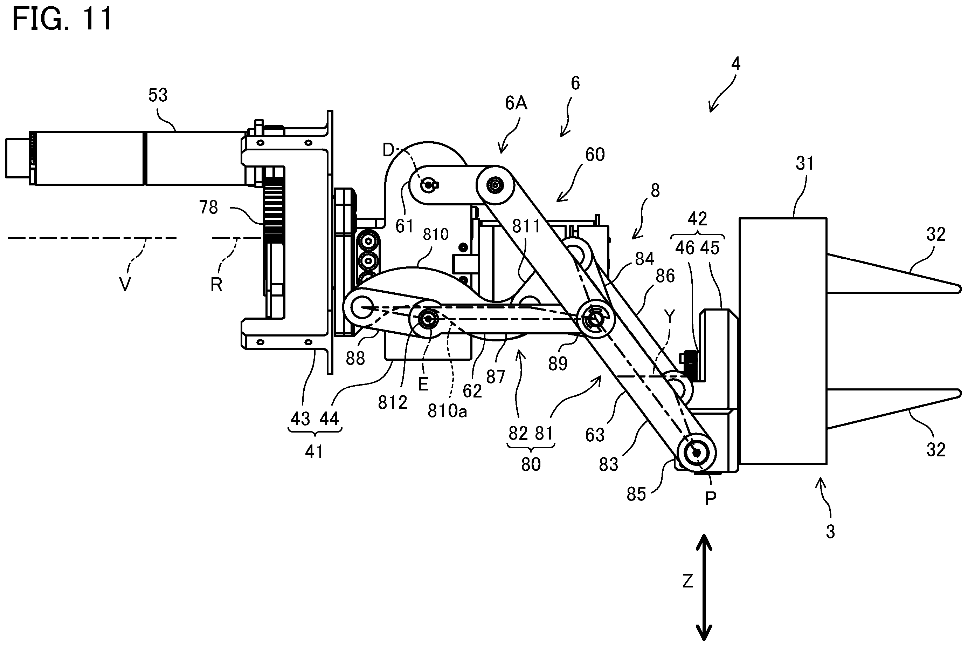

In the pitch transfer 8, the shaft 812 is coupled to the second driving link 88. Thus, as illustrated in FIG. 11, the second intermediate link 810 approaches the shaft 812 in some situations of the pitch transfer 8. FIG. 11 is a side view of the wrist 4 in a case where the hand 3 is most advanced in the straight direction Z and the pitch angle is 90 degrees. The second intermediate link 810 is curved to avoid interference with the shaft 812 when the second intermediate link 810 approaches the shaft 812 in conjunction with the second driving link 88. That is, when the angle between the second driving link 88 and the second fixing link 87 is large, the second intermediate link 810 approaches the shaft 812. The second intermediate link 810 includes a curved portion 810a that is recessed opposite to the shaft 812 in a portion that approaches the shaft 812. The curved portion 810a of the second intermediate link 810 causes the second intermediate link 810 to be less likely to interfere with the shaft 812. As a result, the movement range of the second intermediate link 810 is enlarged, and consequently, the range of the pitch motion of the wrist 4 is enlarged.

### =Third Actuator=

The third actuator 53 is an electric motor, specifically, a servo motor. The third actuator 53 includes an encoder. As illustrated in FIG. 5, the third actuator 53 is attached to the first base 41, more specifically, the base body 43.

Rotation of the third actuator 53 is transferred to the rotation body 44 via a roll transfer 76. The roll transfer 76 includes a gear train. Specifically, the roll transfer 76 includes a first gear 77 attached to the output shaft of the third actuator 53 and a second gear 78 attached to the rotation body 44. The first gear 77 rotates integrally with the output shaft. The second gear 78 is non-rotatably attached to the rotation body 44. The second gear 78 meshes with the first gear 77.

### =Roll Motion=

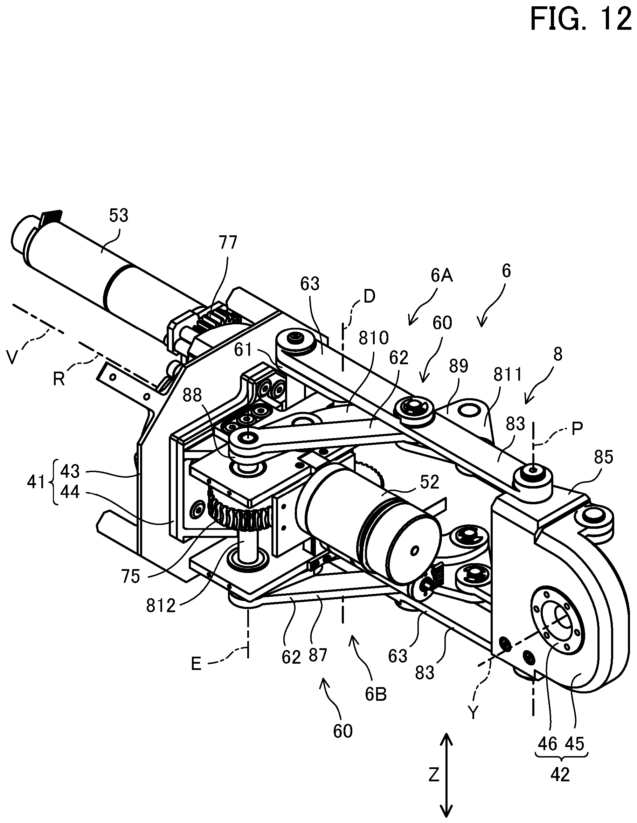

Next, a roll motion of the wrist 4 will be described. FIG. 12 is a perspective view of the wrist 4 after a roll motion. The wrist 4 in FIG. 12 rotates the linkage 6 about the roll axis R from the basic state of FIG. 4. In this example, a roll angle when the straight direction Z extends in the vertical direction and the fingers 32 extend downward from the hand body 31 is defined as 0 degrees. A direction that rotates clockwise when viewed while facing the first base 41 in a direction of the roll axis R is positive. The linkage 6 in FIG. 12 is rotated approximately 90 degrees about the roll axis R.

When the third actuator 53 is operated, the first gear 77 rotates. In conjunction with the first gear 77, the second gear 78 rotates, and the rotation body 44 rotates about the roll axis R integrally with the second gear 78. The linkage 6 is coupled to the rotation body 44. The second base 42 is coupled to the linkage 6. In this manner, the third actuator 53 rotates the second base 42 about the roll axis R. Since the hand 3 is coupled to the second base 42, the hand 3 rotates about the roll axis R. The pitch transfer 8 also rotates about the roll axis R integrally with the rotation body 44.

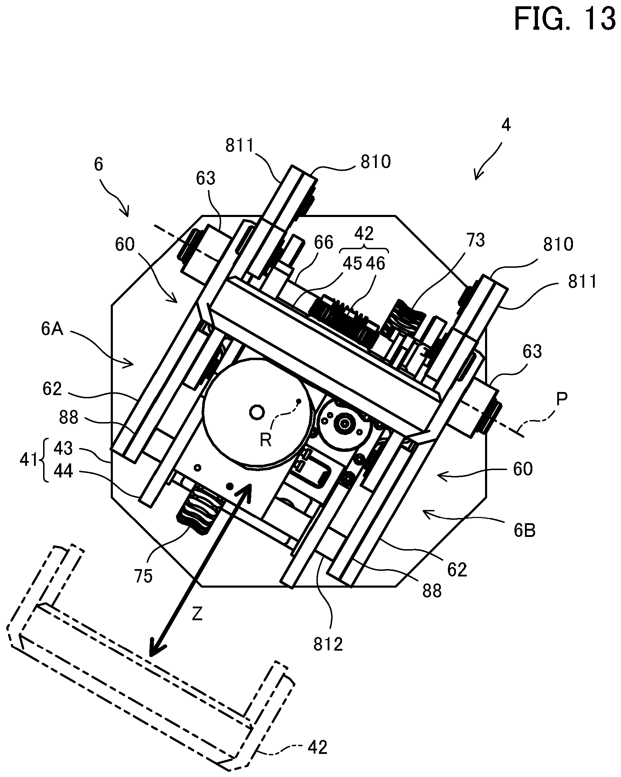

FIG. 13 is a front view of the wrist 4 in a state where the linkage 6 has been rotated about the roll axis R. Since the linkage 6 rotates about the roll axis R, the straight direction Z and the pitch axis P also rotate about the roll axis R. That is, by rotating the linkage 6 about the roll axis R, it is possible to change orientation of the direction in which the hand 3 moves linearly, as well as to change orientation of the pitch axis P of a pitch motion of the wrist 4.

### =Fourth Actuator=

The fourth actuator 54 is an electric motor, specifically, a servo motor. The fourth actuator 54 includes an encoder. As illustrated in FIG. 3, the fourth actuator 54 is attached to the second base 42, more specifically, the base body 45. The fourth actuator 54 is located between the first linkage 6A and the second linkage 6B.

### =Yaw Transfer=

Rotation of the fourth actuator 54 is transferred to the rotation body 46 via the yaw transfer 79. The yaw transfer 79 includes a transmission belt and a worm gear. Specifically, the shaft 47 is supported by the base body 45 to be rotatable about the axis of the shaft 47. The yaw transfer 79 includes a pulley attached to an output shaft of the fourth actuator 54, a pulley attached to shaft 47, a belt wound around the two pulleys, a worm 710 attached to the shaft 47, and a worm wheel 711 attached to the rotation body 46. The worm 710 is non-rotatably attached to the shaft 47 and rotates integrally with the shaft 47. The worm wheel 711 is non-rotatably attached to the rotation body 46 and meshes with the worm 710. The yaw axis Y passes through the center of the worm wheel 711.

When the fourth actuator 54 is operated, the shaft 47 rotates via the two pulleys and the belt. The worm 710 rotates together with the shaft 47, and the worm wheel 711 rotates in conjunction with the worm 710. The rotation body 46 rotates integrally with the worm wheel 711.

### =Yaw Motion=

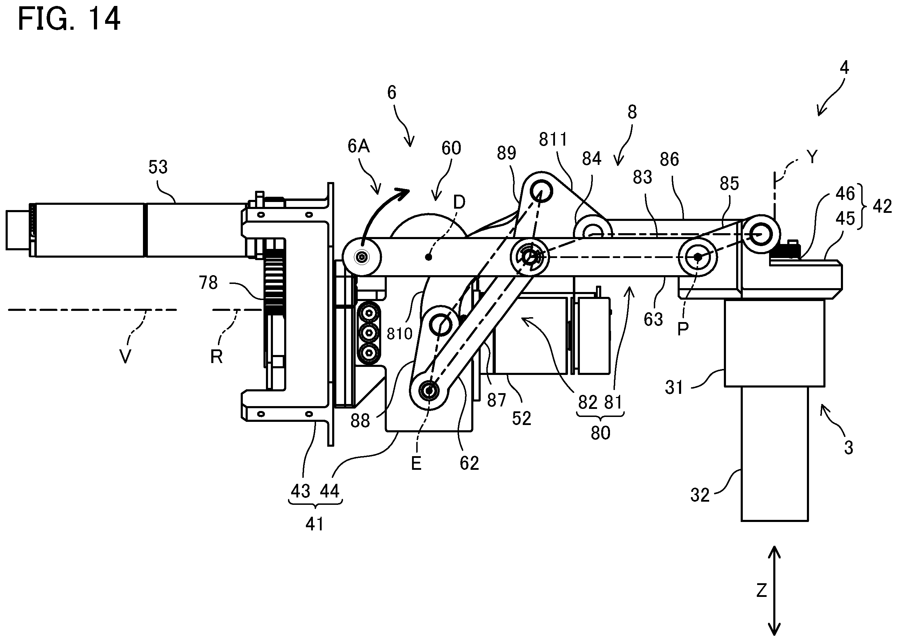

Next, a yaw motion of the wrist 4 will be described. FIG. 14 is a side view of the wrist 4 after a yaw motion. The wrist 4 in FIG. 14 has rotated the hand 3 about the yaw axis Y from the basic state of FIG. 4. In this example, a yaw angle when the opening/closing direction of the fingers 32 is parallel to the roll axis R is defined as 0 degrees. The hand 3 in FIG. 14 is rotated approximately 90 degrees about the yaw axis Y.

When the rotation body 46 is rotated about the yaw axis Y by the fourth actuator 54, the hand 3 rotates about the yaw axis Y integrally with the rotation body 46. When the wrist 4 performs a yaw motion, orientation of the opening/closing direction of the fingers 32 is changed. In FIG. 4, the opening/closing direction of the fingers 32 is parallel to the roll axis R. On the other hand, in FIG. 14, the opening/closing direction of the fingers 32 is orthogonal to the roll axis R.

Since the hand 3 is supported by the second base 42 to be rotatable about the yaw axis Y, in a case where the second base 42 moves by a roll motion and/or a pitch motion, orientation of the yaw axis Y also changes in accordance with the second base 42.

The thus-configured wrist 4 flexibly moves the hand 3 through a straight-traveling motion, a pitch motion, a roll motion, and a yaw motion. For example, while the robot arm 2 moves the hand 3 to the work space H, that is, above the first container C1, the wrist 4 moves the hand 3 at the first position in the straight direction Z. At this time, the straight direction Z is oriented vertically, and the second position is located below the first position. The roll axis R is oriented in the horizontal direction. The pitch axis P is oriented in the horizontal direction. The yaw axis Y is oriented in the vertical direction. Since the hand 3 is located at the first position, the overall size of the hand 3 and the wrist 4 in the straight direction Z is small. Accordingly, the hand 3 and the wrist 4 easily enter a small space such as the work space H.

From this state, the wrist 4 moves the hand 3 toward the second position in the straight direction Z via the Chebyshev linkage 60. Accordingly, the hand 3 linearly moves downward and enters the first container C1. When the hand 3 reaches the workpiece W, the hand 3 grips the workpiece W with the fingers 32.

After gripping the workpiece W, the wrist 4 moves the hand 3 toward the first position in the straight direction Z via the Chebyshev linkage 60. Accordingly, the hand 3 linearly moves upward and exits from the first container C1.

Thereafter, the robot arm 2 retracts the hand 3 and the wrist 4 from the work space H. In this manner, picking of the workpiece W is completed. At this time, since the hand 3 is located at the first position, the overall size of the hand 3 and the wrist 4 in the straight direction Z is small. Accordingly, the hand 3 and the wrist 4 easily exit from a small space such as the work space H.

Regarding the entry of the hand 3 into the first container C1, the wrist 4 can move the hand 3 in various manners. For example, as illustrated in FIG. 13, orientation of the straight direction Z changes by a roll motion of the wrist 4. That is, the straight direction Z tilts with respect to the vertical direction. From this state, when the wrist 4 moves the hand 3 toward the second position in the straight direction Z, the hand 3 linearly moves obliquely downward. Accordingly, the reach position of the hand 3 can be adjusted without moving the robot arm 2.

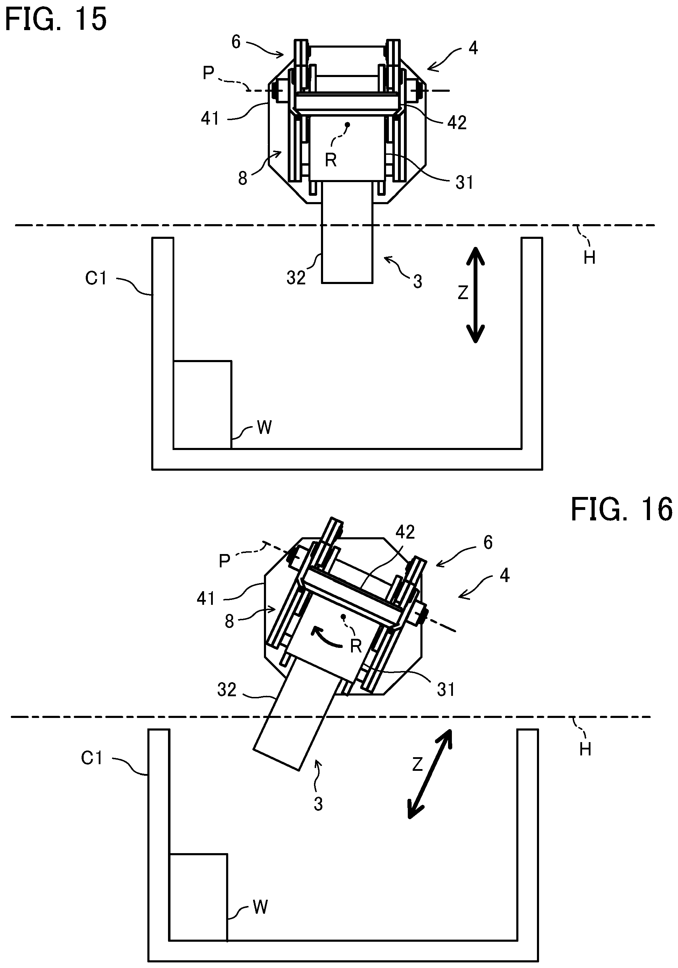

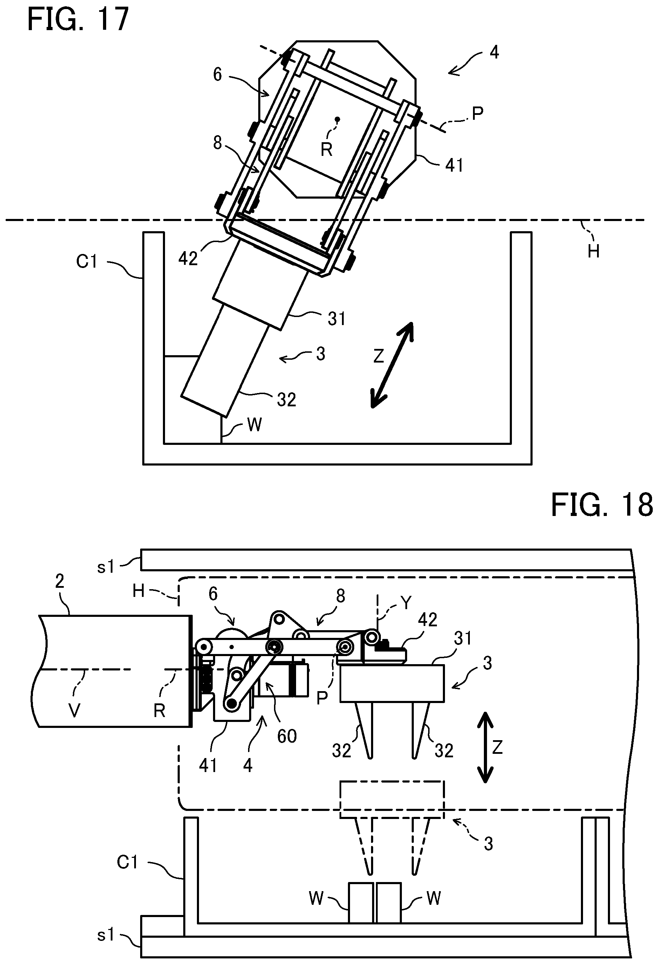

As a result of adjustment of the reach position of the hand 3, the reach range of the hand 3 can be enlarged. FIGS. 15, 16, and 17 are explanatory drawings of a procedure to enlarge the reach range of the hand 3. FIG. 15 is a front view of the hand 3 and the wrist 4 located above the first container C1. FIG. 16 is a front view of the hand 3 and the wrist 4 after a roll motion. FIG. 17 is a front view of the hand 3 and the wrist 4 after a straight-traveling operation. For example, in a case where a workpiece W is located near a side wall of the first container C1, when the hand 3 is moved from above in the vertical direction toward the workpiece W, the hand 3 might interfere with the side wall of the first container C1. In such a case, as illustrated in FIG. 15, the hand 3 is located at a position away from the side wall of the first container C1. Then, as illustrated in FIG. 16, the wrist 4 directs the straight direction Z toward the workpiece W near the side wall through a roll motion. Subsequently, as illustrated in FIG. 17, the wrist 4 linearly moves the hand 3 obliquely downward through a straight-traveling operation. In this manner, the hand 3 can reach the workpiece W while avoiding interference with the side wall.

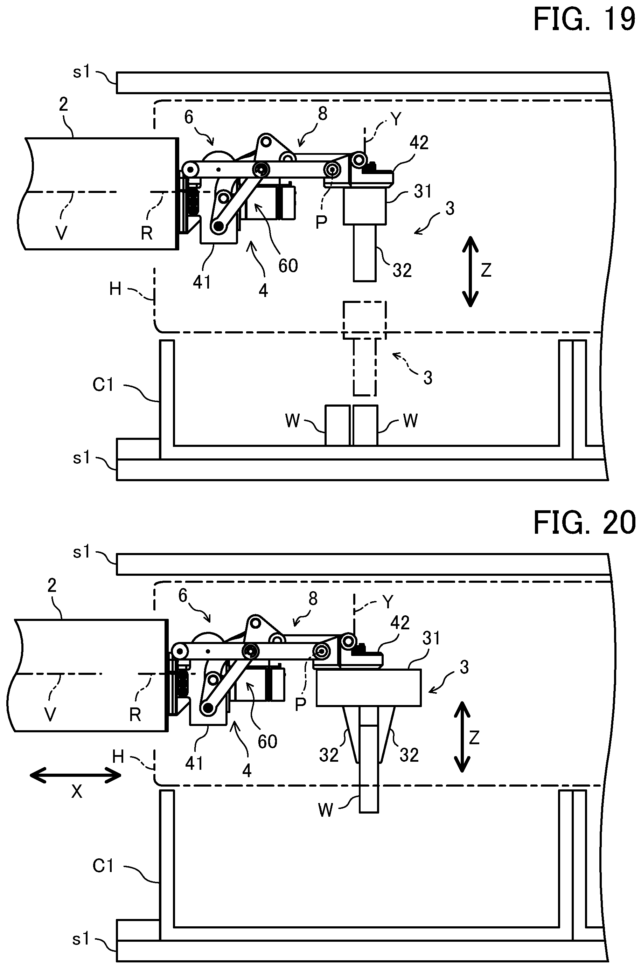

Orientation of the opening/closing direction of the fingers 32 can be changed by the yaw motion of the wrist 4. FIG. 18 is a side view of the hand 3 and the wrist 4 before a yaw motion in picking adjacent workpieces W. FIG. 19 is a side view of the hand 3 and the wrist 4 after the yaw motion in picking the adjacent workpieces W. For example, in some cases, a workpiece W is located adjacent to another object, for example, another workpiece W. In such cases, as illustrated in FIG. 18, when the arrangement direction of workpieces W and the opening/closing direction of the fingers 32 coincide, the fingers 32 might fail to appropriately grip a target workpiece W because of interfere with the another workpiece W. A yaw motion of the wrist 4 can make the opening/closing direction of the fingers 32 different from the arrangement direction of the workpieces W, as illustrated in FIG. 19. Accordingly, the fingers 32 can appropriately grip the target workpiece W without interfering with the another workpiece W. In this manner, by performing the yaw motion of the wrist 4, the opening/closing direction of the fingers 32 can be adjusted in accordance with a situation around the workpiece W.

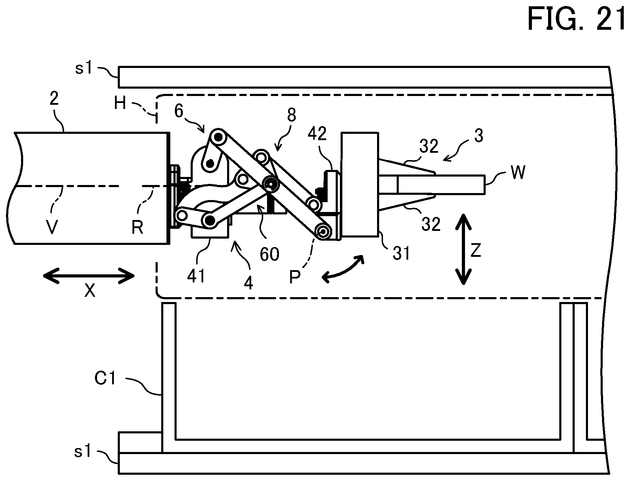

Furthermore, when the wrist 4 performs a pitch motion, orientation in which the fingers 32 extend can be changed. FIG. 20 is a side view of the hand 3 and the wrist 4 in a state where the hand 3 is retracted in the straight direction while gripping a workpiece W. FIG. 21 is a side view of the hand 3 and the wrist 4 with the hand 3 gripping the workpiece W rotated about the pitch axis P. For example, orientation of the workpiece W gripped by the fingers 32 can be flexibly changed. The workpiece W gripped by the fingers 32 is normally in a state of being hung in the straight direction Z. As illustrated in FIG. 20, in a case where the workpiece W is large, the overall size of the hand 3 and the wrist 4, including the workpiece W, is large in the straight direction Z. In a case where the overall size of the hand 3 and other components in the straight direction Z is large, highly accurate position control of the hand 3 and other components may be necessary when the robot arm 2 retracts the hand 3 and other components from the work space H. In some cases, the workpiece W might interfere with the first container C1. In such cases, as illustrated in FIG. 21, the wrist 4 performs a pitch motion so that the yaw axis Y is substantially parallel to the advancing/retracting axis V, resulting in a state where the workpiece W extends from the fingers 32 in the direction of the advancing/retracting axis V. This reduces the overall size of the hand 3 and the wrist 4, including the workpiece W, in the straight direction Z. Consequently, the robot arm 2 easily retracts causes the hand 3 and other components from the work space H. In addition, the wrist 4 may also adjust the position of the hand 3 in the straight direction Z. The pitch motion of the wrist 4 may cause the hand 3 or the wrist 4 to project in the straight direction Z with respect to the robot arm 2 (see FIG. 10). The adjustment of the position of the hand 3 in the straight direction Z closer to the advancing/retracting axis V by the wrist 4 can reduce the overall size of the robot arm 2, the hand 3, and the wrist 4 in the straight direction Z.

In this manner, the wrist 5 flexibly moves the hand 3 so that the workpiece W placed in a complicated place that restricts movement of the robot arm 2 can be appropriately picked by the hand 3. That is, it is difficult to move the hand 3 into the first container C1 only with movement of the robot arm 2. By moving the hand 3 in the straight direction Z with the wrist 4, it is possible to move the hand 3 into the first container C1 without moving the robot arm 2. At this time, since the wrist 4 linearly moves the hand 3, the position of the hand 3 can be easily managed compared to a case where the hand 3 moves in a curved manner. For example, it becomes easier to avoid interference between the hand 3 and other objects.

Furthermore, the linkage 6 employs the Chebyshev linkage 60 for movement of the hand 3. The amount of linear movement by the Chebyshev linkage 60 is relatively large. That is, it is possible to enlarge a stroke of the hand 3 in the straight direction Z while suppressing an increase in size of the linkage 6. The Chebyshev linkage 60 moves by rotational driving of the driving link 61. Thus, the Chebyshev linkage 60 is driven by a motor. For example, linear movement of the hand 3 may also be achieved by a combination of a linear guide and a cylinder. However, a motor has higher controllability than that of a cylinder. By employing the Chebyshev linkage 60, movement of the hand 3 in the straight direction Z can be easily and accurately controlled.

In addition, moving the wrist 4 results in smaller and lighter movable members than moving the robot arm 2. When an operating member is small, the possibility of interference with other members is reduced. When the movable member is light, a driving force for movement is reduced and controllability is enhanced. That is, even in a place other than a complex place, the wrist 4 achieves such advantages.

The linkage 6 supports the second base 42 with the first linkage 6A and the second linkage 6B facing each other. Accordingly, support rigidity of the second base 42 increases. In addition, the first linkage 6A and the second linkage 6B are coupled to each other by the shaft 66. Accordingly, rigidity of the linkage 6 increases.

The driving link 61 of the first linkage 6A and the driving link 61 of the second linkage 6B are coupled to each other by the shaft 65 and are driven by the common first actuator 51 via the shaft 65. This can reduce driving sources of the first linkage 6A and the second linkage 6B. Furthermore, as illustrated in FIG. 3, in the facing direction in which the first linkage 6A and the second linkage 6B face each other, the two driving links 61 are located between the intermediate link 63 of the first linkage 6A and the intermediate link 63 of the second linkage 6B. In this layout, the two intermediate links 63 move outside the shaft 65, and thus, interference between the intermediate links 63 and the shaft 65 is prevented.

In addition, as illustrated in FIG. 5, the two four-bar linkages 80 are located between the intermediate link 63 of the first linkage 6A and the intermediate link 63 of the second linkage 6B in the facing direction of the first linkage 6A and the second linkage 6B. Accordingly, the two four-bar linkages 80 can be placed compactly in the direction of the driving shaft D.

Further, the first intermediate link 86 and the second intermediate link 810 are arranged in a plane orthogonal to the facing direction of the first linkage 6A and the second linkage 6B, that is, in a plane orthogonal to the driving shaft D. The first intermediate link 86 is included in the first four-bar linkage 81, and the second intermediate link 810 is included in the second four-bar linkage 82. Thus, in the direction of the driving shaft D, the first intermediate link 86 and the second intermediate link 810 hardly overlap. Even if the first intermediate link 86 and the second intermediate link 810 are arranged in the same plane orthogonal to the driving shaft D, the first intermediate link 86 and the second intermediate link 810 do not interfere with each other. By arranging the first intermediate link 86 and the second intermediate link 810 in the same plane, the size of the four-bar linkage 80 in the direction of the driving shaft D can be reduced.

The pitch transfer 8 transfers a driving force of the second actuator 52 to the second base 42 through the linkage. Thus, compared to a configuration that transfers a driving force using a cylinder or the like, the configuration of the pitch transfer 8 can be miniaturized.

Some links included in the Chebyshev linkage 60 function as links included in the pitch transfer 8. By making some links of the Chebyshev linkage 60 and some links of the pitch transfer 8 common, the configuration of the wrist 4 can be simplified.

Since the four-bar linkage 80 included in the pitch transfer 8 is a parallel linkage, it is easy to manage the pitch angle of the second base 42, and accordingly, the pitch angle of the hand 3. The four-bar linkage 80 has substantially the same angle of the two opposed links. Even in a case where the four-bar linkage 80 operates in conjunction with the Chebyshev linkage 60, the pitch angle of the hand 3 can be maintained constant by maintaining the angle of the link facing the link fixed to the second base 42. As a result, the hand 3 can be linearly moved in the straight direction Z without changing the pitch angle of the hand 3.

The length of the driving link 61 of the Chebyshev linkage 60 is longer than or equal to the length any of the first driving link 84, the first driven link 85, and the second driven link 89. Accordingly, the wrist 4 can be compactly deformed in the straight direction Z. Specifically, the Chebyshev linkage 60 moves by rotation of the driving link 61. As illustrated in FIG. 7, the driving link 61 projects toward the retracting side in the straight direction Z relative to the driving shaft D, depending on the rotation angle. Each of the first driving link 84, the first driven link 85, and the second driven link 89 also faces the retracting side in the straight direction Z in some cases. For example, as illustrated in FIG. 4, the first driving link 84, the first driven link 85, and the second driven link 89 are relatively located on the retracting side in the straight direction Z in a case where the distal end portion of the intermediate link 63 is located at the first position. At this position, each of the first driving link 84, the first driven link 85, and the second driven link 89 may be oriented toward the retracting side in the straight direction Z, depending on the angle of the second driving link 88 (see FIGS. 4 and 10). The length of the driving link 61 is longer than or equal to the length of any of the first driving link 84, the first driven link 85, and the second driven link 89. Thus, even in a state where each of the first driving link 84, the first driven link 85, and the second driven link 89 projects most in the straight direction Z, these links only project to a range approximately the same as that of the driving link 61 in a state where the driving link 61 projects most in the straight direction Z. That is, it is possible to prevent any of the first driving link 84, the first driven link 85, and the second driven link 89 from projecting beyond the movement range of the driving link 61 in the straight direction Z. This can prevent the size of the wrist 4 in the straight direction Z from enlarging beyond the movement range of the driving link 61 toward the retracting side.

### <<OTHER EMBODIMENTS>>

In the foregoing section, the embodiment has been described as an example of the technique disclosed in the present application. The technique disclosed here, however, is not limited to this embodiment, and is applicable to other embodiments obtained by changes, replacements, additions, and/or omissions as necessary. Components described in the above embodiment may be combined as a new exemplary embodiment. Components provided in the accompanying drawings and the detailed description can include components unnecessary for solving problems as well as components necessary for solving problems in order to exemplify the technique. Therefore, it should not be concluded that such unnecessary components are necessary only because these unnecessary components are included in the accompanying drawings or the detailed description.

For example, the work performed by the robot 1 is not limited to the transfer work. The robot 1 may perform work such as assembly of components. In the case of the transfer work, the robot 1 may pick a workpiece W from the second container C2 and place the workpiece W in the first container C1. The wrist 4 can flexibly move the hand 3 by performing a straight-traveling motion, a pitch motion, a roll motion, and a yaw motion as described above in placing the workpiece W. The wrist 4 may also perform a straight-traveling motion, a pitch motion, a roll motion, and a yaw motion as described above in picking the workpiece W from the second container C2. The workpiece W before and after transfer may not be located in the container. For example, the workpiece W before transfer may be placed on a tray, a pallet, or a conveyor. The workpiece W after transfer may be placed on a tray, a pallet, or a conveyor.

A treatment performed by the hand 3 is not limited to holding of a workpiece. For example, the treatment by the hand 3 may be machining, welding, coating, or other treatments. Holding of a workpiece by the hand 3 is not limited to gripping and may also be adsorption or the like.

Utilization of motion of the wrist 4 is not limited to narrow spaces where movement of the robot arm 2 is restricted. Even in an environment where movement of the robot arm 2 is not restricted, moving the hand 3 by the wrist 4 has advantages such as reduction of a driving force and enhancement of controllability.

The pitch motion, the roll motion, and the yaw motion by the wrist 4 are not necessary. The wrist 4 only needs to move the hand 3 linearly via at least the Chebyshev linkage 60. For example, the wrist 4 may combine at least one of the pitch motion, the roll motion, or the yaw motion with the straight-traveling motion by the Chebyshev linkage 60.

The linkage 6 includes two linkages: the first linkage 6A and the second linkage 6B. Alternatively, the linkage 6 may include only one of the first linkage 6A and the second linkage 6B. Alternatively, the linkage 6 may include three or more linkages.

Regarding the roll motion, the rotation body 44 is coupled to the base body 43 of the first base 41 to be rotatable about the roll axis R. Accordingly, the linkage 6, the second base 42, and the hand 3 rotate about the roll axis R. Alternatively, the configuration for the roll motion is not limited to this example. The second base 42 may be a split body rotatable about the roll axis. In this case, the linkage 6 does not rotate about the roll axis R, and the hand 3 rotates about the roll axis R.

Regarding the pitch motion, the second base 42 is coupled to the linkage 6 to be rotatable about the pitch axis P. Accordingly, the hand 3 rotates about the pitch axis P. However, the configuration for the pitch motion is not limited to this example. The first base 41 may be a split body rotatable about the pitch axis. In this case, the linkage 6, the second base 42, and the hand 3 rotate about the pitch axis.

Regarding the yaw motion, the rotation body 46 is coupled to the base body 45 of the second base 42 to be rotatable about the yaw axis Y. Accordingly, the hand 3 rotates about the yaw axis Y. However, the configuration for the yaw motion is not limited to this example. The first base 41 may be a split body rotatable about the yaw axis. In this case, the linkage 6, the second base 42, and the hand 3 rotate about the yaw axis.

The techniques of the present disclosure described above are summarized as follows.
[1] A robot wrist 4 includes; a first base 41 attached to a robot arm 2; a second base 42 to which a hand 3 is attached; a linkage 6 movably coupling the second base 42 to the first base 41l and a first actuator 51 that drives the linkage 6, the linkage 6 includes a Chebyshev linkage 60 coupling the second base 42 to the first base 41 such that the second base 42 is linearly movable in a predetermined straight direction Z, the Chebyshev linkage 60 includes a driving link 61 that is coupled to the first base 41 to be rotatable about a predetermined driving axis D and is rotationally driven, a driven link 62 coupled to the first base 41 to be rotatable about an axis parallel to the driving axis D, and an intermediate link 63 coupled to each of the driving link 61 and the driven link 62 to be rotatable about an axis parallel to the driving axis D, and the second base 42 is coupled to the intermediate link 63.
   In this configuration, the second base 42 moves relative to the first base 41 via the linkage 6 so that the hand 3 linearly moves in the straight direction Z relative to the robot arm 2. The linear movement by the linkage 6 is achieved by the Chebyshev linkage 60. The Chebyshev linkage 60 has a large stroke in linear movement, while having a small overall size. Thus, it is possible to increase the stroke of the robot wrist 4 in the straight direction Z while making the robot wrist 4 compact. Further, the Chebyshev linkage 60 moves by rotation of the driving link 61. That is, a driving source of the Chebyshev linkage 60 may be driven by a motor. For example, compared to the case of being driven by a cylinder or the like, driving by the motor has high controllability. Consequently, positioning accuracy of the hand 3 in the straight direction Z and other performance are enhanced.
[2] The robot wrist 4 of [1] further includes a second actuator 52 that rotates the second base 42 about a pitch axis P extending in a direction intersecting the straight direction Z, and a pitch transfer 8 that transfers a driving force of the second actuator 52 to the second base 42.
   In this configuration, the robot wrist 4 can rotate the hand 3 about the pitch axis P in addition to linear movement of the hand 3 in the straight direction Z. As a result, the hand 3 can be flexibly moved by the robot wrist 4.
[3] In the robot wrist 4 of [1] or [2], the second base 42 is coupled to the intermediate link 63 to be rotatable about the pitch axis P.
   In this configuration, in a pitch motion of the robot wrist 4, the Chebyshev linkage 60 does not rotate about the pitch axis P, whereas the second base 42 rotates about the pitch axis P with respect to the intermediate link 63. This can reduce the weight of members that rotate about the pitch axis P, thus enhancing controllability of the pitch motion of the robot wrist 4.
[4] In the robot wrist 4 of any one of [1] to [3], the pitch transfer 8 includes a four-bar linkage 80.
   In this configuration, the second base 42 is rotated about the pitch axis P via the four-bar linkage 80. Compared to a configuration in which the second base 42 is rotated via a cylinder or the like, the configuration for a pitch motion of the robot wrist 4 can be miniaturized.
[5] In the robot wrist 4 of any one of [1] to [4], the intermediate link 63 functions as a link included in the four-bar linkage 80.
   In this configuration, since the second base 42 is coupled to the intermediate link 63, the intermediate link 63 can be used for the link of the four-bar linkage 80 that rotates the second base 42 about the pitch axis P. By using the intermediate link 63 as a link of the four-bar linkage 80, the four-bar linkage 80 can be simplified.
[6] In the robot wrist 4 of any one of [1] to [5], the four-bar linkage 80 is a parallel linkage including a first fixing link 83 that is the intermediate link of the Chebyshev linkage 60, a first driving link 84 coupled to the first fixing link 83 to be rotatable about an axis parallel to the pitch axis P, a first driven link 85 coupled to the first fixing link 83 to be rotatable about an axis parallel to the pitch axis P and fixed to the second base 42, and a first intermediate link 86 coupled to each of the first driving link 84 and the first driven link 85 to be rotatable about an axis parallel to the pitch axis P, and a posture of the first driving link 84 is maintained during movement of the Chebyshev linkage 60.
   In this configuration, the intermediate link 63 of the Chebyshev linkage 60 also functions as the first fixing link 83 of the four-bar linkage 80. Thus, when the Chebyshev linkage 60 moves, the four-bar linkage 80 also moves. Since the four-bar linkage 80 is a parallel linkage, even when the four-bar linkage 80 moves, the angles of the opposed links remain the same. When a posture of the first driving link 84 is maintained during movement of the Chebyshev linkage 60, the posture of the first driven link 85 facing the first driving link 84, that is, the angle of the second base 42, is maintained. As a result, even in a configuration in which the Chebyshev linkage 60 and the four-bar linkage 80 share some links, it is possible to move the hand 3 in the straight direction Z without changing the pitch angle of the hand 3.
[7] In the robot wrist 4 of any one of [1] to [6], the four-bar linkage 80 includes a first four-bar linkage 81 that is coupled to the second base 42, and a second four-bar linkage 82 that is coupled to the first four-bar linkage 81 and driven by the second actuator 52.
   In this configuration, a driving force of the second actuator 52 is transferred to the second base 42 via the first four-bar linkage 81 and the second four-bar linkage 82. Since the four-bar linkage 80 includes two four-bar linkages of the first four-bar linkage 81 and the second four-bar linkage 82, the linkages can be relatively flexibly arranged.
[8] In the robot wrist 4 of any one of [1] to [7], the intermediate link 63 functions as a link included in the first four-bar linkage 81, and the driven link 62 functions as a link included in the second four-bar linkage 82.
   In this configuration, the four-bar linkage 80 can be simplified by using the intermediate link 63 as a link of the first four-bar linkage 81 and using the driven link 62 as a link of the second four-bar linkage 82.
[9] In the robot wrist 4 of any one of [1] to [8], the first four-bar linkage 81 includes a first fixing link 83 that is the intermediate link 63 of the Chebyshev linkage 60, a first driving link 84 coupled to the first fixing link 83 to be rotatable about an axis parallel to the pitch axis P, a first driven link 85 coupled to the first fixing link 83 to be rotatable about an axis parallel to the pitch axis P, and a first intermediate link 86 coupled to each of the first driving link 84 and the first driven link 85 to be rotatable about an axis parallel to the pitch axis P, the second four-bar linkage 82 includes a second fixing link 87 that is the driven link 62 of the Chebyshev linkage 60, a second driving link 88 coupled to the second fixing link 87 to be rotatable about an axis parallel to the pitch axis P, a second driven link 89 coupled to the second fixing link 87 to be rotatable about an axis parallel to the pitch axis P, and a second intermediate link 810 coupled to each of the second driving link and the second driven link to be rotatable about an axis parallel to the pitch axis P, the second driving link 88 is rotationally driven by the second actuator 52, the second driven link 89 and the first driving link 84 are coupled to each other by a connecting link 811, and a length of the driving link 61 of the Chebyshev linkage 60 is longer than or equal to a length of any one of the first driving link 84, the first driven link 85, and the second driven link 89.
   In this configuration, the robot wrist 4 can be deformed compactly in the straight direction Z. Specifically, the Chebyshev linkage 60 moves by rotation of the driving link 61. The driving link 61 projects most in the straight direction Z in a state where the driving link 61 faces a side opposite to the driven link 62, that is, the retracting side, in the straight direction Z. Each of the first driving link 84, the first driven link 85, and the second driven link 89 also faces toward the retracting side in the straight direction Z in some cases. The length of the driving link 61 is longer than or equal to the length of any of the first driving link 84, the first driven link 85, and the second driven link 89. Thus, even in a state where each of the first driving link 84, the first driven link 85, and the second driven link 89 projects most in the straight direction Z, these links only project to a range approximately the same as that of the driving link 61 in a state where the driving link 61 projects most in the straight direction Z. That is, it is possible to prevent any of the first driving link 84, the first driven link 85, and the second driven link 89 from projecting beyond the movement range of the driving link 61 in the straight direction Z. This can prevent a dimension of the robot wrist 4 in the straight direction Z from enlarging beyond the movement range of the driving link 61 toward the retracting side.
[10] The robot wrist 4 of any one of [1] to [9], the first four-bar linkage 81 includes a first fixing link 83 that is the intermediate link 63 of the Chebyshev linkage 60, a first driving link 84 coupled to the first fixing link 83 to be rotatable about an axis parallel to the pitch axis P, a first driven link 85 coupled to the first fixing link 83 to be rotatable about an axis parallel to the pitch axis P, and a first intermediate link 86 coupled to each of the first driving link 84 and the first driven link 85 to be rotatable about an axis parallel to the pitch axis P, the second four-bar linkage 82 includes a second fixing link 87 that is the driven link of the Chebyshev linkage 60, a second driving link 88 coupled to the second fixing link 87 to be rotatable about an axis parallel to the pitch axis P, a second driven link 89 coupled to the second fixing link 87 to be rotatable about an axis parallel to the pitch axis P, and a second intermediate link 810 coupled to each of the second driving link 88 and the second driven link 89 to be rotatable about an axis parallel to the pitch axis P, a shaft 812 that is rotationally driven by the second actuator 52 is coupled to the second driving link 88, and the second intermediate link 810 is curved to avoid interference with the shaft 812 in a case where the second intermediate link 810 approaches the shaft 812 in conjunction with the second driving link 88.
   In this configuration, the movement range of the four-bar linkage 80 can be enlarged, and as a result, the range of a pitch motion of the robot wrist 4 can be enlarged. Specifically, in the first four-bar linkage 81 and the second four-bar linkage 82, there may be a situation where one of the links approaches or overlaps one of the joints when viewed in the direction of the rotation axis of the second driving link 88. For example, the second intermediate link 810 may approach a joint including the rotation axis of the second driving link 88. The shaft 812 is coupled to this second driving link 88. The second driving link 88 is rotationally driven by the second actuator 52 via the shaft 812. Accordingly, the second intermediate link 810 may approach the shaft 812. The second intermediate link 810 is curved to avoid interference with the shaft 812. In the example described above, the second intermediate link 810 includes the curved portion 810a that is curved to be recessed toward the side opposite to the shaft 812. The curved portion of the second intermediate link 810 causes the second intermediate link 810 to be less likely to interfere with the shaft 812. As a result, the movement range of the second intermediate link 810 is enlarged, and the range of a pitch motion of the robot wrist 4 is enlarged.
[11] The robot wrist 4 of any one of [1] to [10] further includes: a fourth actuator 54 that rotates the hand 3 about a predetermined yaw axis Y; and a yaw transfer 79 that transfers a driving force of the fourth actuator 54, wherein the second base 42 includes a rotation body 46 rotatable about the yaw axis Y, the hand being attached to the rotation body 46, and the yaw transfer 79 transfers a driving force of the fourth actuator 54 to the rotation body 46.
   In this configuration, the robot wrist 4 can rotate the hand 3 about the yaw axis Y in addition to linear movement of the hand 3 in the straight direction Z. As a result, the robot wrist 4 can flexibly move the hand 3.
[12] The robot wrist 4 of any one of [1] to [11] further includes a third actuator 53 that rotates the second base 42 about a roll axis R, the roll axis R extending in a direction intersecting both the straight direction Z and a direction of a pitch axis P extending in a direction intersecting the straight direction Z, wherein the linkage 6 is coupled to the first base 41 to be rotatable about the roll axis R.
   In this configuration, the robot wrist 4 can rotate the hand 3 about the roll axis R in addition to linear movement of the hand 3 in the straight direction Z. As a result, the robot wrist 4 can flexibly move the hand 3. As well as the hand 3, the linkage 6 also rotates about the roll axis R. That is, orientation of the straight direction Z rotates about the roll axis R. As a result, orientation of a direction in which the hand 3 linearly moves can be changed about the roll axis R.
[13] In the robot wrist 4 of any one of [1] to [12], the linkage 6 includes a pair of a first linkage 6A and a second linkage 6B that face each other, each of the first linkage 6A and the second linkage 6B movably couples the second base 42 to the first base 41 and includes the Chebyshev linkage 60, and the intermediate link 63 of the first linkage 6A and the intermediate link 63 of the second linkage 6B are coupled to each other.
   In this configuration, support rigidity of the hand 3 is enhanced. Specifically, since the second base 42 is supported by two linkages of the first linkage 6A and the second linkage 6B, support rigidity of the second base 42 is enhanced. Furthermore, the first linkage 6A and the second linkage 6B face each other, and the intermediate link 63 of the first linkage 6A is coupled to the intermediate link 63 of the second linkage 6B. Accordingly, rigidity of the first linkage 6A and the second linkage 6B increases. Consequently, support rigidity of the second base 42 also increases.
[14] In the robot wrist 4 of any one of [1] to [13], the first actuator 51 is located between the first linkage 6A and the second linkage 6B.
   In this configuration, since the first actuator 51 is located between the first linkage 6A and the second linkage 6B, the size of the robot wrist 4 can be made compact in the direction in which the first linkage 6A and the second linkage 6B face each other.
[15] In the robot wrist 4 of any one of [1] to [14], the driving link 61 of the first linkage 6A is located inward of the intermediate link 63 of the first linkage 6A in a direction in which the first linkage 6A and the second linkage 6B face each other, and the driving link 61 of the second linkage 6B is located inward of the intermediate link 63 of the second linkage 6B in the direction in which the first linkage 6A and the second linkage 6B face each other.
   In this configuration, while placing the first actuator 51 between the first linkage 6A and the second linkage 6B, the movement range of the two intermediate links 63 can be enlarged. Specifically, since the first actuator 51 is located between the first linkage 6A and the second linkage 6B, the first actuator 51, a transfer thereof, and other members are arranged between the driving link 61 of the first linkage 6A and the driving link 61 of the second linkage 6B. When the intermediate link 63 of the first linkage 6A and the intermediate link 63 of the second linkage 6B are located inward of the two driving links 61, there is a risk that the two intermediate links 63 may interfere with the first actuator 51, the transfer thereof, and other members. On the other hand, by arranging the two intermediate links 63 outward of the two driving links 61, the two intermediate links 63 can move without interfering with the first actuator 51, the transfer thereof, and other members.
[16] In the robot wrist 4 of any one of [1] to [15], a joint 64a coupling the driving link 61 and the intermediate link 63 in the first linkage 6A is coupled to a joint 64a coupling the driving link 61 and the intermediate link 63 in the second linkage 6B.
   In this configuration, coupling of the two driving links 61 and coupling of the two intermediate links 63 can be achieved at the same time by coupling the joint 64a of the first linkage 6A to the joint 64a of the second linkage 6B to each other. In addition, since the two intermediate links 63 are coupled, rigidity of the intermediate links 63 is enhanced, and thus, rigidity of the hand 3 by the linkage 6 is enhanced.
[17] The robot wrist 4 of any one of [1] to [16], further includes: a second actuator 52 that rotates the second base 42 about a pitch axis P extending in a direction intersecting the straight direction Z; and a pitch transfer 8 that transfers a driving force of the second actuator 52 to the second base 42, the second base 42 is coupled to the intermediate link 63 to be rotatable about the pitch axis P, the pitch transfer 8 includes a first four-bar linkage 81 that is coupled to the second base 42, and a second four-bar linkage 82 that is coupled to the first four-bar linkage 81 and driven by the second actuator 52, the intermediate link 63 function as a first fixing link 83 included in the first four-bar linkage 81, the driven link 62 function as a second fixing link 87 included in the second four-bar linkage 82, the first four-bar linkage 81 includes a first intermediate link 86 located at a position facing the first fixing link 83, the second four-bar linkage 82 includes a second intermediate link 810 located at a position facing the second fixing link 87, and the first intermediate link 86 and the second intermediate link 810 are located in an identical plane orthogonal to a direction in which the first linkage 6A and the second linkage 6B face each other.

In this configuration, the first intermediate link 86 is included in the first four-bar linkage 81, and the second intermediate link 810 is included in the second four-bar linkage 82. Thus, the first intermediate link 86 and the second intermediate link 810 hardly overlap each other in the direction in which the first four-bar linkage 81 and the second four-bar linkage 82 face each other. Even when the first intermediate link 86 and the second intermediate link 810 are located in the same plane orthogonal to the direction in which the first linkage 6A and the second linkage 6B face each other, the first intermediate link 86 and the second intermediate link 810 hardly interfere with each other. By placing the first intermediate link 86 and the second intermediate link 810 in the same plane, the size of the four-bar linkage 80 in the direction in which the first linkage 6A and the second linkage 6B face each other can be reduced.

## Claims

1. A robot wrist comprising:
a first base attached to a robot arm;
a second base to which a hand is attached;
a linkage movably coupling the second base to the first base; and
a first actuator that drives the linkage, wherein
the linkage includes a Chebyshev linkage coupling the second base to the first base such that the second base is linearly movable in a predetermined straight direction,
the Chebyshev linkage includes a driving link that is coupled to the first base to be rotatable about a predetermined driving axis and is rotationally driven, a driven link coupled to the first base to be rotatable about an axis parallel to the driving axis, and an intermediate link coupled to each of the driving link and the driven link to be rotatable about an axis parallel to the driving axis, and
the second base is coupled to the intermediate link.

2. The robot wrist according to claim 1, further comprising:
a second actuator that rotates the second base about a pitch axis extending in a direction intersecting the straight direction; and
a pitch transfer that transfers a driving force of the second actuator to the second base.

3. The robot wrist according to claim 2, wherein
the second base is coupled to the intermediate link to be rotatable about the pitch axis.

4. The robot wrist according to claim 3, wherein
the pitch transfer includes a four-bar linkage.

5. The robot wrist according to claim 4, wherein
the intermediate link functions as a link included in the four-bar linkage.

6. The robot wrist according to claim 5, wherein
the four-bar linkage is a parallel linkage including a first fixing link that is the intermediate link of the Chebyshev linkage, a first driving link coupled to the first fixing link to be rotatable about an axis parallel to the pitch axis, a first driven link coupled to the first fixing link to be rotatable about an axis parallel to the pitch axis and fixed to the second base, and a first intermediate link coupled to each of the first driving link and the first driven link to be rotatable about an axis parallel to the pitch axis, and
a posture of the first driving link is maintained during movement of the Chebyshev linkage.

7. The robot wrist according to claim 5, wherein
the four-bar linkage includes a first four-bar linkage that is coupled to the second base, and a second four-bar linkage that is coupled to the first four-bar linkage and driven by the second actuator.

8. The robot wrist according to claim 7, wherein
the intermediate link functions as a link included in the first four-bar linkage, and
the driven link functions as a link included in the second four-bar linkage.

9. The robot wrist according to claim 8, wherein
the first four-bar linkage includes a first fixing link that is the intermediate link of the Chebyshev linkage, a first driving link coupled to the first fixing link to be rotatable about an axis parallel to the pitch axis, a first driven link coupled to the first fixing link to be rotatable about an axis parallel to the pitch axis, and a first intermediate link coupled to each of the first driving link and the first driven link to be rotatable about an axis parallel to the pitch axis,
the second four-bar linkage includes a second fixing link that is the driven link of the Chebyshev linkage, a second driving link coupled to the second fixing link to be rotatable about an axis parallel to the pitch axis, a second driven link coupled to the second fixing link to be rotatable about an axis parallel to the pitch axis, and a second intermediate link coupled to each of the second driving link and the second driven link to be rotatable about an axis parallel to the pitch axis,
the second driving link is rotationally driven by the second actuator,
the second driven link and the first driving link are coupled to each other by a connecting link, and
a length of the driving link of the Chebyshev linkage is longer than or equal to a length of any one of the first driving link, the first driven link, and the second driven link.

10. The robot wrist according to claim 8, wherein
the first four-bar linkage includes a first fixing link that is the intermediate link of the Chebyshev linkage, a first driving link coupled to the first fixing link to be rotatable about an axis parallel to the pitch axis, a first driven link coupled to the first fixing link to be rotatable about an axis parallel to the pitch axis, and a first intermediate link coupled to each of the first driving link and the first driven link to be rotatable about an axis parallel to the pitch axis,
the second four-bar linkage includes a second fixing link that is the driven link of the Chebyshev linkage, a second driving link coupled to the second fixing link to be rotatable about an axis parallel to the pitch axis, a second driven link coupled to the second fixing link to be rotatable about an axis parallel to the pitch axis, and a second intermediate link coupled to each of the second driving link and the second driven link to be rotatable about an axis parallel to the pitch axis,
a shaft that is rotationally driven by the second actuator is coupled to the second driving link, and
the second intermediate link is curved to avoid interference with the shaft in a case where the second intermediate link approaches the shaft in conjunction with the second driving link.

11. The robot wrist according to any one of claims 1 to 10, further comprising:
a fourth actuator that rotates the hand about a predetermined yaw axis; and
a yaw transfer that transfers a driving force of the fourth actuator, wherein
the second base includes a rotation body rotatable about the yaw axis, the hand being attached to the rotation body, and
the yaw transfer transfers a driving force of the fourth actuator to the rotation body.

12. The robot wrist according to any one of claims 1 to 10, further comprising
a third actuator that rotates the second base about a roll axis, the roll axis extending in a direction intersecting both the straight direction and a direction of a pitch axis extending in a direction intersecting the straight direction, wherein
the linkage is coupled to the first base to be rotatable about the roll axis.

13. The robot wrist according to claim 1, wherein
the linkage includes a pair of a first linkage and a second linkage that face each other,
each of the first linkage and the second linkage movably couples the second base to the first base and includes the Chebyshev linkage, and
the intermediate link of the first linkage and the intermediate link of the second linkage are coupled to each other.

14. The robot wrist according to claim 13, wherein
the first actuator is located between the first linkage and the second linkage.

15. The robot wrist according to claim 13 or 14, wherein
the driving link of the first linkage is located inward of the intermediate link of the first linkage in a direction in which the first linkage and the second linkage face each other, and
the driving link of the second linkage is located inward of the intermediate link of the second linkage in the direction in which the first linkage and the second linkage face each other.

16. The robot wrist according to claim 13 or 14, wherein
a joint coupling the driving link and the intermediate link in the first linkage is coupled to a joint coupling the driving link and the intermediate link in the second linkage.

17. The robot wrist according to claim 13 or 14, further comprising:
a second actuator that rotates the second base about a pitch axis extending in a direction intersecting the straight direction; and
a pitch transfer that transfers a driving force of the second actuator to the second base, wherein
the second base is coupled to the intermediate link to be rotatable about the pitch axis,
the pitch transfer includes a first four-bar linkage that is coupled to the second base, and a second four-bar linkage that is coupled to the first four-bar linkage and driven by the second actuator,
the intermediate link functions as a first fixing link included in the first four-bar linkage,
the driven link functions as a second fixing link included in the second four-bar linkage,
the first four-bar linkage includes a first intermediate link located at a position facing the first fixing link,
the second four-bar linkage includes a second intermediate link located at a position facing the second fixing link, and
the first intermediate link and the second intermediate link are located in an identical plane orthogonal to a direction in which the first linkage and the second linkage face each other.
